# EUROPÄISCHE PATENTSCHRIFT

(11) **EP 3 244 085 B1**
(45) Veröffentlichungstag und Bekanntmachung des Hinweises auf die Patenterteilung: **14.08.2019**
(21) Anmeldenummer: 17174096.2
(22) Anmeldetag: 16.09.2013
(51) Int. Cl.: F16D 55/226, F16D 65/18, F16D 65/56

(54) **SCHEIBENBREMSE MIT EINER SYNCHRONEINRICHTUNG**
DISC BRAKE WITH A SYNCHRONOUS DEVICE
FREIN À DISQUE DOTÉ D'UN DISPOSITIF SYNCHRONE

(30) Priorität: 17.09.2012 DE 102012108682
(43) Veröffentlichungstag der Anmeldung: 15.11.2017
(62) Teilanmeldung aus: 13765338.2
(73) Patentinhaber: KNORR-BREMSE Systeme für Nutzfahrzeuge GmbH, 80809 München (DE)
(72) Erfinder: RGUICHI, Abdelaziz, 82140 Olching (DE); KLINGNER, Matthias, 82272 Moorenweis (DE); PESCHEL, Michael, 82296 Schöngeising (DE); ASEN, Alexander, 94428 Eichendorf (DE); BRANDL, Christian, 94447 Plattling (DE); STÖGER, Christian, 94486 Osterhofen (DE)
(74) Vertreter: Specht, Peter

(56) Entgegenhaltungen:
- DE-A1- 3 937 289
- DE-A1-102008 035 366
- DE-U1- 9 018 014
- US-A- 5 701 978
- US-A1- 2007 119 665

## Beschreibung

Die Erfindung betrifft eine Scheibenbremse mit einer, insbesondere für ein Kraftfahrzeug, nach dem Oberbegriff des Anspruchs 1.

Fahrzeuge und bestimmte technische Geräte verwenden häufig Reibungsbremsen, um kinetische Energie umzuwandeln. Bevorzugt wird dabei speziell im Personenkraftwagen- und im Nutzfahrzeugbereich die Scheibenbremse. Bei der typischen Bauform einer Scheibenbremse besteht diese aus einem Bremssattel samt innerer Mechanik, aus in der Regel zwei Bremsbelägen und der Bremsscheibe. Auf die innere Mechanik werden über einen pneumatisch betätigten Zylinder die Zylinderkräfte eingeleitet, durch einen Exzentermechanismus verstärkt und als Zuspannkraft einer Zuspannvorrichtung über Gewindespindeln auf Bremsbeläge und Bremsscheibe übertragen, wobei über die Gewindespindeln der Verschleiß von Bremsscheibe und Bremsbelägen ausgeglichen wird. Die Gewindespindeln sind üblicherweise untereinander durch eine Synchroneinrichtung zur gleichmäßigen Nachstellung des Verschleißes gekoppelt. Pneumatisch betätigte Scheibenbremsen, insbesondere pneumatisch betätigte Scheibenbremsen, weisen in der Regel einen als Schiebesattel, Schwenksattel oder Festsattel ausgebildeten Bremssattel auf, in welchem die Zuspannvorrichtung angeordnet ist, die dazu dient, die Bremsbeläge beidseits der Bremsscheibe und die Bremsscheibe miteinander in Wirkverbindung zu bringen, um durch Reibung eine Bremswirkung zu erzielen.

Die WO 91/19115 beschreibt eine Scheibenbremse für Fahrzeuge, wobei eine Zuspannvorrichtung einen Drehhebel aufweist, der an seinem unteren Ende wenigstens einen Exzenteransatz aufweist, der über ein erstes Schwenklager drehbar in Inneren des Bremssattels gelagert ist und der über eine Stützwalze an einer Traverse abgestützt ist, in welche die Nachstellspindeln eingeschraubt sind, die über Druckstücke auf den aktionsseitigen Bremsbelag einwirken können, um diesen bei Bremsungen in Richtung der Bremsscheibe zu verschieben. Diese bekannte pneumatisch betätigte Scheibenbremse weist zudem eine automatische Nachstellvorrichtung auf, um den Belag- und Scheibenverschleiß auszugleichen.

Gemäß der WO 91/19115 wirkt die Nachstellvorrichtung drehend entweder auf die Mutter (die in dieser Schrift als die Traverse ausgebildet ist) oder die Spindel einer Mutter-/Spindelanordnung, um durch eine Relativverschraubung zwischen Mutter und Schaube die Länge der Mutter-/Spindelanordnung zu verändern, wodurch die Gesamtlänge der Zuspannvorrichtung zwischen dem Bremsbelag und dem Widerlager der Zuspannvorrichtung am Inneren des Bremssattels vergrößert wird, wodurch wiederum der zunehmende Belagverschleiß ausgeglichen wird.

Die automatische Nachstellvorrichtung wird mittelbar oder unmittelbar von einem Spreiz- oder Betätigungsmechanismus angetrieben. So ist es aus dem genannten Stand der Technik bekannt, den Drehhebel der Zuspannvorrichtung über einen Antriebsstift mit einem Getriebeelement der Nachstellvorrichtung zu koppeln, so dass bei einem Zuspannen der Bremse, bei welchem der Drehhebel verschwenkt wird, auch das Getriebeelement der Nachstellvorrichtung bewegt, insbesondere gedreht wird. Diese Drehung wird über weitere Getriebeelemente der Nachstellvorrichtung auf ein Abtriebsgetriebeelement übertragen, welches drehfest mit der Mutter oder der Spindel der Mutter-/Spindelanordnung gekoppelt ist.

In der WO 91/19115 sind zwei drehfest gekoppelte Mutter-Spindelanordnungen vorgesehen, die über ein Synchronisationsgetriebe - ein Umschlingungsgetriebe wie eine Kette oder einen Zahnriemen - drehfest gekoppelt sind, wobei nur in einer dieser Anordnungen eine Nachstellvorrichtung bzw. ein Nachstellantrieb angeordnet ist. Das Synchronisationsgetriebe ist zwischen dem Exzenteransatz des Drehhebels und der Traverse angeordnet.

Die DE 90 18 014 U1 beschreibt eine Scheibenbremse für Fahrzeuge, insbesondere Straßenfahrzeuge, mit einem eine Bremsscheibe übergreifenden Bremssattel, der einseitig eine Zuspannvorrichtung mit einem um eine zur Ebene der Bremsscheibe parallel verlaufende Drehachse schwenkbaren Nockenhebel aufweist, dessen Nocken in Bewegungsrichtung wenigstens annähernd rechtwinklig zur Ebene der Bremsscheibe mit wenigstens einer Stellspindel gekoppelt ist, die sich wenigstens annähernd rechtwinklig zur Ebene der Bremsscheibe erstreckt und die verstellbar mit dem Nocken oder einem von diesem bewegbaren Zwischenteil (Traverse) verschraubt ist und gegen deren bremsscheibenseitiges Ende sich ein relativ zum Bremssattel quer zur Bremsscheibe verschieblicher Bremsbelag abstützt, und wobei zum Justieren eines Lösespiels ein vom Schwenkhub des Nockenhebels betätigter Drehantrieb für die Stellspindel vorgesehen ist. Der Drehantrieb ist im Wesentlichen in einer axialen, wenigstens bremsscheibenabgewandt offenen Ausnehmung der Stellspindel angeordnet und ein Abtriebsteil des Drehantriebes ist relativ undrehbar, aber axialverschieblich mit der Stellspindel gekoppelt. In einer Ausführung mit zwei Stellspindeln weise diese eine ihr Gewinde durchschneidende Axialverzahnung auf, in welche ein die beiden Stellspindeln drehfest miteinander koppelnder Zahnriemen eingreift. An der Traverse befinden sich Halteorgange zur Führung des Zahnriemens.

Die US 5 701 978 A beschreibt einen Bremsbelagsatz für eine Schiebesattel-Scheibenbremse, welcher einen ersten Bremsbelag mit einer ersten Haltefeder für einen Klemmeingriff an einem Bremskolben und einen zweiten Bremsbelag mit einer zweiten Haltefeder für einen Klemmeingriff an einem axialen externen Schenkel des Schiebesattels aufweist. Die erste Haltefeder weist zwei federnde Zungen auf, welche in einer Bohrung des hohlen Bremskolbens festgesetzt sind. Die zweite Haltefeder besitzt identische federnde Zungen, welche in einer Ausnehmung des externen Gehäuseschenkels festgesetzt sind. Die Abstände zwischen den jeweils gegenüber liegenden federnden Zungen sind unterschiedlich in Übereinstimmung mit den jeweiligen unterschiedlichen Weiten der Bohrung und der Ausnehmung. Auf diese Weise können die Bremsbeläge nicht vertauscht werden. Dieser Schutz gegen Vertauschen kann durch unterschiedliche Form der Reibbeläge der Bremsbeläge erhöht werden.

Die vorstehend beschriebene Scheibenbremse der DE 90 18 014 U1 hat sich an sich bewährt, es soll aber eine höhere Steifigkeit der gesamten Scheibenbremse sowie eine reduzierte Kapazität der Nachstelleinrichtung zu erreichen, um zu Bauraumvorteilen durch kürzere Gewindestempel zu gelangen.

Die Lösung dieser Aufgabe ist das Ziel der Erfindung.

Die Erfindung löst diese Aufgabe durch den Gegenstand des Anspruchs 1.

Nach dem Gegenstand des Anspruchs 1 wird zunächst die Anordnung und Ausgestaltung des Synchronisationsgetriebes in einfacher Weise gestaltet Aus der WO 91/19115 ist es zwar an sich bekannt, ein Umschlingungsgetriebe vorzusehen, dieses umfasst aber den Bereich zwischen Bremsdrehhebel und Traverse und ist daher nur unzureichend geschützt. Nach der Erfindung liegen dagegen direkt Funktionsbauteile der Synchroneinrichtung zwischen der Traverse und dem Bremsdrehhebel, was nach einer vorteilhaften Variante insbesondere dadurch vorteilhaft möglich wird, dass diese Synchroneinrichtung an der Traverse angeordnet ist und mit ihr eine Baugruppe bildet. Die Synchroneinrichtung ist nicht im Kraftfluss zwischen der Traverse und dem Drehhebel angeordnet, kann aber in Zuspannrichtung direkt in den Raum zwischen diesen Elementen eingesetzt werden. Die Synchroneinrichtung ist somit zwischen dem Bremsdrehhebel und der Traverse an der Traverse angeordnet. Dies hat außerdem den Vorteil, dass die Synchroneinrichtung keine separate Abdeckung erforderlich macht.

Es ist zudem der reaktionsseitige Bremsbelag größer ausgebildet ist als der zuspannseitige Bremsbelag. Durch die vergrößerte Fläche kann bei gleichem Verschleißvolumen die Dicke des Reibmaterials des Bremsbelags reduziert werden. Dabei ergeben sich eine höhere Steifigkeit der gesamten Scheibenbremse sowie eine reduzierte Kapazität der Nachstelleinrichtung. Diese reduzierte Kapazität führt außerdem zu Bauraumvorteilen durch kürzere Gewindestempel.

Weitere vorteilhafte Ausgestaltungen sind in den Unteransprüchen angegeben.

In einer Ausführung weist die Synchroneinrichtung Koppelräder auf, von denen jeweils eins mit dem jeweiligen Gewindestempel einer der mindestens zwei Spindeleinheiten drehfest gekoppelt ist, und umfasst ein Synchronmittel, wobei jedes Koppelrad einen Synchronabschnitt zur Zusammenwirkung mit dem Synchronmittel aufweist. Das Synchronmittel kann z.B. ein Zugmittel sein, wie beispielsweise ein Zahnriemen. In einer bevorzugten Ausführung ist das Synchronmittel eine Kette, und die Synchronabschnitte der Koppelräder sind Kettenradverzahnungen. Die Kette ist ein handelsübliches Bauteil, und Kettenverzahnungen sind einfach herzustellen.

In einer weiteren Ausführung ist vorgesehen, dass das Synchronmittel an einer Traversenoberseite der Traverse angeordnet ist. Dadurch wird nur ein minimaler Bauraum benötigt. Außerdem können die Koppelräder der Synchroneinrichtung an der Traverse ortsfest und drehbar angeordnet sein, was nur einen geringsten Bauraumbedarf ausmacht.

In einer noch weiteren Ausführung sind die Koppelräder der Synchroneinrichtung an der Traverse ortsfest und drehbar in Aufnahmen angeordnet und mittels federnder Elemente, vorzugsweise Axialfedern axial vorgespannt. Dies hat den Vorteil, dass eine Sitzfestigkeit und Verdrehsicherung der Synchroneinrichtung erhöht wird. Durch die entstehende Reibkraft der Koppelräder in und an der Traverse wird ein definiertes Haltemoment erzeugt.

In einer anderen Ausführung weist mindestens eins der Koppelräder ein Einsatzelement auf, welches mit dem zugehörigen Koppelrad über eine Verzahnung verbindbar ist. Mit einem solchen mehrteiligen Koppelrad ist eine Einstellung der Synchroneinrichtung möglich, indem das Einsatzelement erst dann eingesetzt wird, wenn die Gewindestempel in gleiche Position gebracht worden sind. Natürlich können auch mehrere Einsatzelemente für eine solche Ausführung verwendet werden. Die Verzahnung kann z.B. eine Kerbverzahnung o.dgl. sein.

In weiterer Ausführung weist das Koppelrad einen Eingriffsabschnitt auf, der zur drehfesten Zusammenwirkung mit einem Gewindestempel einer Spindeleinheit vorgesehen ist. Damit kann das Koppelrad mehrere Funktionen besitzen, nämlich ein Bauteil der Synchroneinrichtung und gleichzeitig ein Bauteil einer Nachstelleinrichtung bzw. Mitnehmereinrichtung.

In einer anderen Ausführung ist vorgesehen, dass auf der Traverse mindestens einer, zwei oder mehr Lagerböcke ausgebildet ist/sind und dass mindestens einer der Lagerböcke mindestens eine Seitenausnehmung zur Führung oder zur Aufnahme des Synchronmittels aufweist. Auf diese Weise ist eine Mehrfachfunktion der Lagerböcke möglich. Außerdem wird das Synchronmittel zusätzlich geführt und geschützt.

Hierbei kann die mindestens eine Seitenausnehmung des mindestens einen der Lagerböcke eine Führungsrundung zur Führung des Synchronmittels aufweisen. Es ist auch möglich, dass der mindestens eine der Lagerböcke mit einem separaten Führungselement zur Führung des Synchronmittels (20g) ausgerüstet ist. Alternativ oder zusätzlich kann der mindestens eine der Lagerböcke oder ein an dem mindestens einen der Lagerböcke anbringbares Bauteil zur Führung und zur Spannung des Synchronmittels vorgesehen sein. So lassen sich auf einfache Weise weitere Funktionen ermöglichen.

In einer anderen Ausführung ist mindestens einer der Lagerböcke separat zur Traverse ausgebildet. Natürlich ist es auch möglich, dass mindestens einer der Lagerböcke vollständig oder zum Teil einstückig mit der Traverse ausgebildet ist.
In einer noch anderen Ausführung weist der mindestens eine der Lagerböcke an seiner zum Bremsdrehhebel weisenden Seite eine Lagerfläche mit vorzugsweise halbkreisförmigem Querschnitt auf, in welche ein Schwenklager, insbesondere ausgebildet als ein Wälzlager oder ein Gleitlager, für den Bremsdrehhebel eingreift. Dadurch wird die Funktion erweitert.

In einer weiteren Ausführung ist vorgesehen, dass die Traverse mit den Gewindestempeln und der Synchroneinrichtung als vormontierte Funktionsbaugruppe ausgeführt ist. Dabei ist eine vorher eingestellte Synchronisation möglich, so dass vor Ort bei der Montage keine Synchronisationsarbeiten unter schwierigeren Umständen notwendig werden. Auf diese Weise kann ein modularisiertes Montagekonzept ermöglicht werden. Außerdem kann die Traverse als vorsynchronisierte Einheit mit den Gewindestempeln im Wartungs- bzw. Servicefall ohne ein erhöhtes Risiko bezüglich Fehlmontage (z.B. unsynchronisierte Gewindestempel) tauschbar sein.

In einer noch weiteren Ausführung ist vorgesehen, dass die Nachstelleinrichtung antriebsseitig mit der Zuspannvorrichtung, vorzugsweise mit dem Bremsdrehhebel, und abtriebsseitig mit einer Spindeleinheit der Scheibenbremse koppelbar ist, und folgendes umfasst: a) ein Antriebselement, an dem axial beiderseits jeweils eine Wälzkörperanordnung angeordnet ist, von denen eine als Wälzlager und eine als Kugelrampenkupplung mit einem Freilauf ausgebildet ist; b) ein mit der Kugelrampenkupplung gekoppeltes Druckelement, welches mit einem Abschnitt der Kugelrampenkupplung eine Überlastkupplung bildet; c) ein mit dem Druckelement gekoppeltes Abtriebselement zur Kopplung mit einem Koppelrad, welches für eine Kopplung mit der Spindeleinheit ausgebildet ist; d) ein Kraftspeicherelement zur Erzeugung einer Vorspannkraft der Kugelrampenkupplung und der Überlastkupplung; und e) einen Tragkörper, welcher an einem Ende mit einer Lagerscheibe verbunden ist und um welchen herum axial in Reihe mit der Lagerscheibe das Antriebselement, die Wälzkörperanordnungen, die Überlastkupplung, das Abtriebselement und das Kraftspeicherelement angeordnet sind, wobei das Kraftspeicherelement zwischen einem Auflageabschnitt des Tragkörpers und dem Druckelement angeordnet ist. Somit ergibt sich ein kompakter Aufbau, der zu einer Bauraumeinsparung der Bremse führen kann.

In einer Ausführung ist der Tragkörper in Hülsengestalt ausgebildet, wobei das Innere des Tragkörpers für eine Aufnahme eines Gewindestempels einer Spindeleinheit der zuzuordnenden Scheibenbremse ausgestaltet ist. Die Hülsengestalt ergibt eine Gewichts- und Werkstoffersparnis und außerdem die Möglichkeit, die Nachstelleinrichtung auf den Gewindestempel aufzusetzen.

Es ist weiterhin vorgesehen, dass auch das Abtriebselement in Hülsengestalt mit zwei zylindrischen Abschnitten ausgebildet ist, die sich ebenfalls leicht durch Umformung ohne zusätzliche spanende Bearbeitung anfertigen lassen. Außerdem ist vorgesehen, dass die zwei zylindrischen Abschnitte des Abtriebselementes unterschiedliche Durchmesser aufweisen und über einen Schulterabschnitt verbunden sind, wobei der eine zylindrische Abschnitt als Abtriebskopplungsabschnitt einen größeren Durchmesser aufweist als der andere zylindrische Abschnitt, der als Abtriebsabschnitt zur Kopplung mit dem Koppelrad ausgebildet ist. Somit ist es möglich, dass das Kraftspeicherelement zwischen dem Abtriebskopplungsabschnitt des Abtriebselementes und dem Tragkörper angeordnet ist. Gleichzeitig ermöglich die Ausgestaltung des Abtriebselementes eine Abdeckung und Schutz vor Verunreinigungen.

In einer noch weiteren Ausführung erstreckt sich der Abtriebsabschnitt des Abtriebselementes in einen Innenraum des Koppelrads steht und mit einem Innenprofil des Koppelrads über Übertragungselemente, vorzugsweise Kugeln, in Zusammenwirkung. Auf diese Weise ist ein einfaches Einstecken in und Herausziehen aus dem Koppelrad für Montage, Wartung und Austausch schnell möglich. Da das Koppelrad in weiterer Ausgestaltung auch gleichzeitig die Funktion eines Synchronrads einer Synchroneinrichtung beinhaltet, ist für die Montage-, Wartungs- und Austauscharbeiten keine Demontage der Synchroneinrichtung notwendig, was Zeit und Kosten einspart. Damit wird eine Entkopplung der Nachstelleinrichtung von der Synchroneinrichtung erreicht.

In einer weiteren Ausführung bilden der Abtriebsabschnitt des Abtriebselementes, das Innenprofil des Koppelrads und die Übertragungselemente ein kardanisches Gelenk. Daraus ergibt sich der Vorteil, dass hiermit Schwenk- und Vertikalbewegungen einer Traverse, in welcher die Gewindestempel eingeschraubt sind, ausgeglichen werden können.

Außerdem ist das Koppelrad in noch weiterer Ausgestaltung mit einem Eingriffsabschnitt versehen, der zur drehfesten Zusammenwirkung mit einem Gewindestempel einer Spindeleinheit der zuzuordnenden Scheibenbremse vorgesehen ist. Der Eingriffsabschnitt kann z.B. Nocken aufweisen, die mit Axialnuten des zugehörigen Gewindestempels zusammenwirken. Damit ist nicht nur eine einfache Montage und Demontage gewährleistet, sondern auch eine relative axiale Verschiebbarkeit zwischen Koppelrad und Gewindestempel ermöglicht.

In einer Ausführung der erfindungsgemäßen Scheibenbremse ist vorgesehen, dass die Nachstelleinrichtung der Verschleißnachstellvorrichtung auf den Gewindestempel der mindestens einen Spindeleinheit der Scheibenbremse aufgesetzt ist und den Gewindestempel mindestens teilweise umschließt. Bei neuen Bremsbelägen umschließt die Nachstelleinrichtung den Gewindestempel mindestens zu zwei Drittel der axialen Länge des Gewindestempels. Ein Vorteil dabei, dass ein kompakter Aufbau ermöglicht wird.

In einer Ausführung ist die Synchroneinrichtung auf der Traverse angeordnet ist. Die damit innerhalb des Sattelgehäuses liegende Synchroneinrichtung kann zu einer verkürzten Bauweise des Bremssattels führen. Außerdem wird kein Deckel für die Synchroneinrichtung benötigt. Dadurch können für beide Öffnungen im Bremssattelgehäuse, die für die Nachstelleinrichtung und die Mitnehmereinrichtung dienen, Deckel mit radialem Abdichtkonzept verwendet werden, was eine Abdichtung vereinfacht.

Außerdem stehen durch den Entfall eines Deckels für die Synchroneinrichtung für den Zylinderflansch eines Pneumatikzylinders mehr Variationsmöglichkeiten offen.

In einer anderen Ausführung ist die Traverse mit den Gewindestempeln und der Synchroneinrichtung als vormontierte Funktionsbaugruppe ausgeführt. Auf diese Weise kann ein modularisiertes Montagekonzept ermöglicht werden. Außerdem kann die Traverse als vorsynchronisierte Einheit mit den Gewindestempeln im Wartungs- bzw. Servicefall ohne ein erhöhtes Risiko bezüglich Fehlmontage (z.B. unsynchronisierte Gewindestempel) tauschbar sein.

In einer weiteren Ausführung ist das Koppelrad der Spindeleinheit mit einer Mitnehmereinheit mit einem Ende eines Aufsatzes gekoppelt, der den zugehörigen Gewindestempel teilweise hülsenartig umschließt, wobei ein anderes Ende des Aufsatzes ein Betätigungsende zur manuellen Betätigung aufweist. Damit wird ein kompakter Aufbau erzielt.

Die Erfindung wird nun anhand beispielhafter Ausführungen mit Bezug auf die beigefügten Zeichnungen näher erläutert. Hierbei zeigen:
- Fig. 1: eine schematische Draufsicht eines Ausführungsbeispiels einer erfindungsgemäßen Scheibenbremse;
- Fig. 2: eine schematische Teilschnittansicht der erfindungsgemäßen Scheibenbremse nach Fig. 1;
- Fig. 3: eine schematische Ansicht einer Variante der erfindungsgemäßen Scheibenbremse nach Fig. 1 von der Zuspannseite her;
- Fig. 4 und 4a: schematische Schnittansichten der Variante der erfindungsgemäßen Scheibenbremse längs der Linie A-A nach Fig. 2 in verschiedenen Verschleißzuständen;
- Fig. 5 und 5a: schematische Schnittansichten der Variante der erfindungsgemäßen Scheibenbremse längs der Linie B-B nach Fig. 2 in verschiedenen Verschleißzuständen;
- Fig. 6: eine vergrößerte Schnittansicht einer Traverse der erfindungsgemäßen Scheibenbremse nach Fig. 4 und einer erfindungsgemäßen Synchroneinrichtung;
- Fig. 6a: eine vergrößerte Schnittansicht eines Ausführungsbeispiels einer Nachstelleinrichtung nach Fig. 2;
- Fig. 7: eine schematische, vergrößerte Schnittansicht eines Abschnitts der Synchroneinrichtung nach Fig. 6;
- Fig. 8 und 9: schematische Perspektivansichten der Traverse mit der Synchroneinrichtung nach Fig. 6;
- Fig. 10: eine vergrößerte Teilansicht der Synchroneinrichtung nach Fig. 8 und 9;
- Fig. 11: eine schematische Perspektivansicht eines Führungselementes der Synchroneinrichtung nach Fig. 10; und
- Fig. 12: eine schematische Perspektivansichten der Traverse mit einer Variante der Synchroneinrichtung nach Fig. 8 und 9.

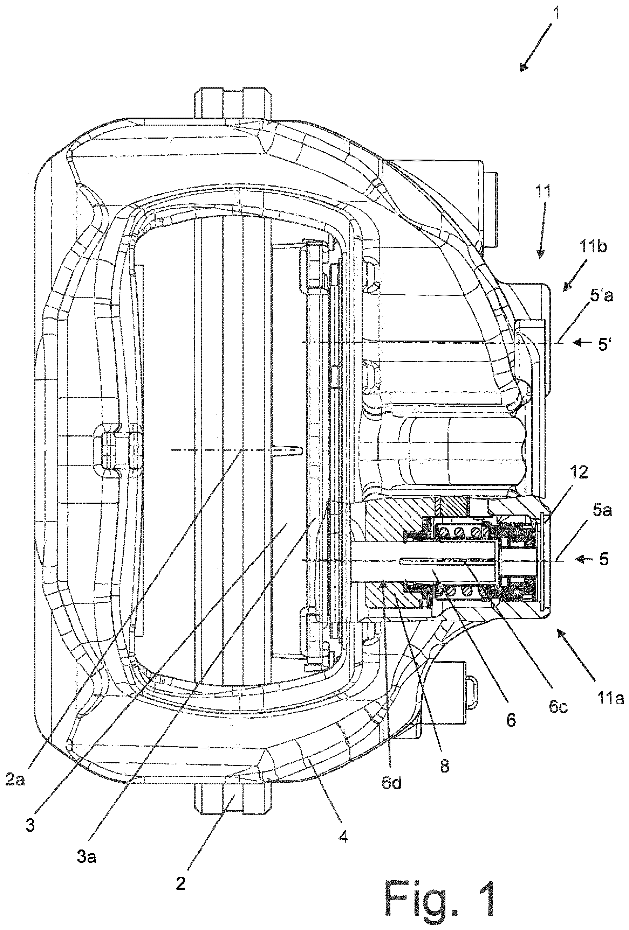

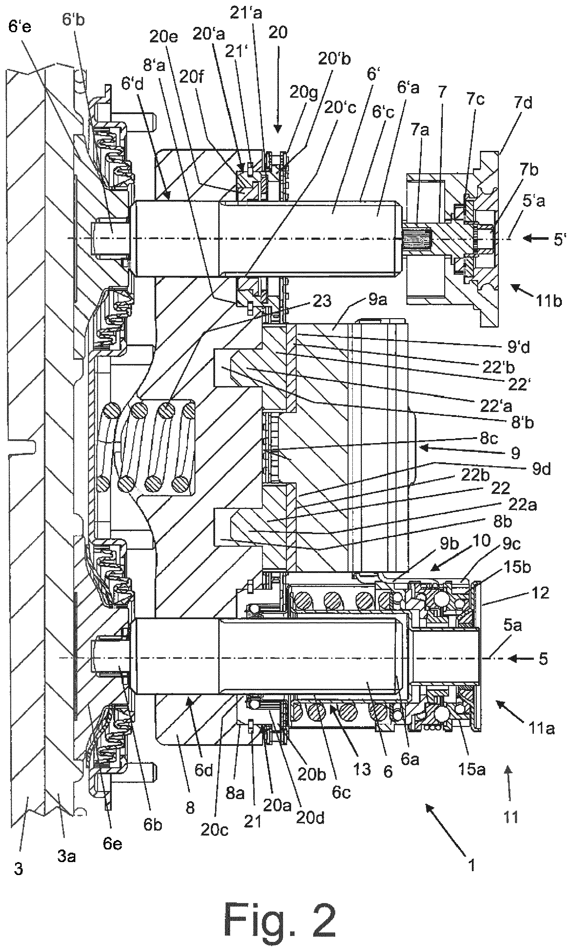

Fig. 1 zeigt ein Ausführungsbeispiel einer erfindungsgemäßen Scheibenbremse 1 in einer Draufsicht. In Fig. 2 ist eine schematische Teilschnittansicht der erfindungsgemäßen Scheibenbremse 1 nach Fig. 1 dargestellt.

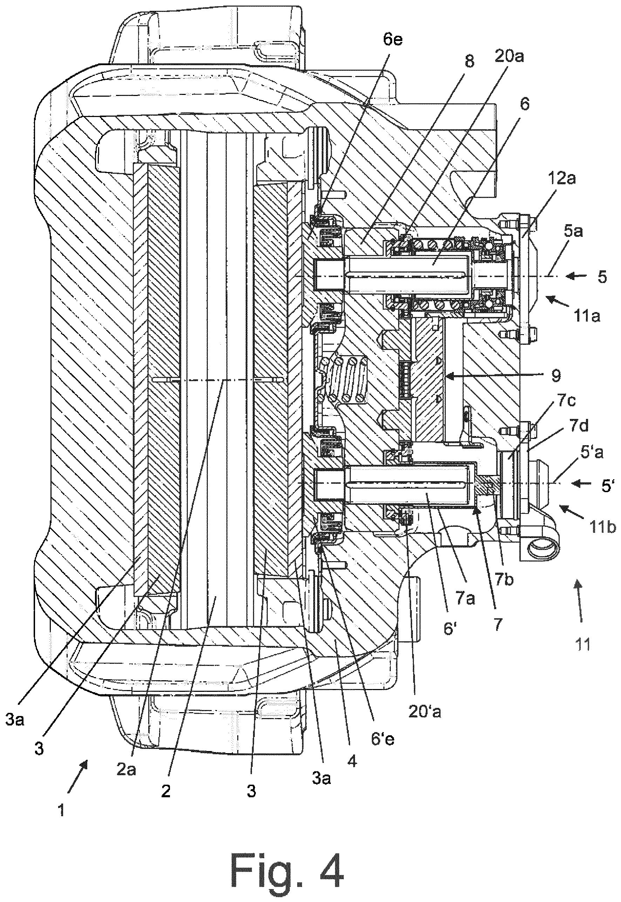

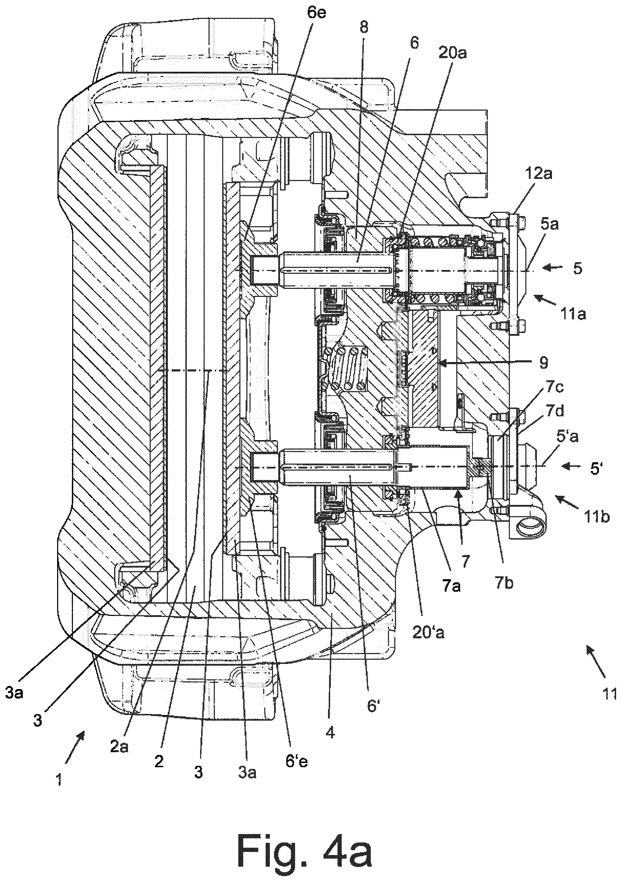

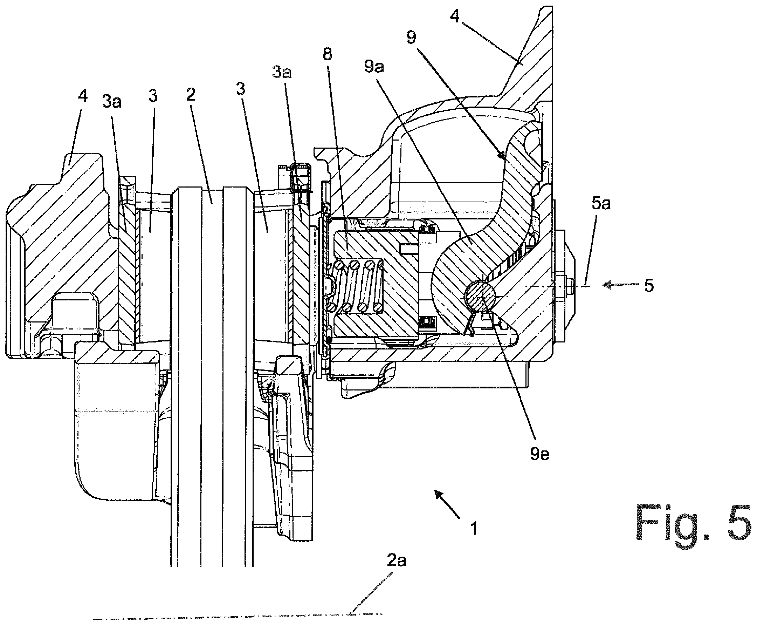

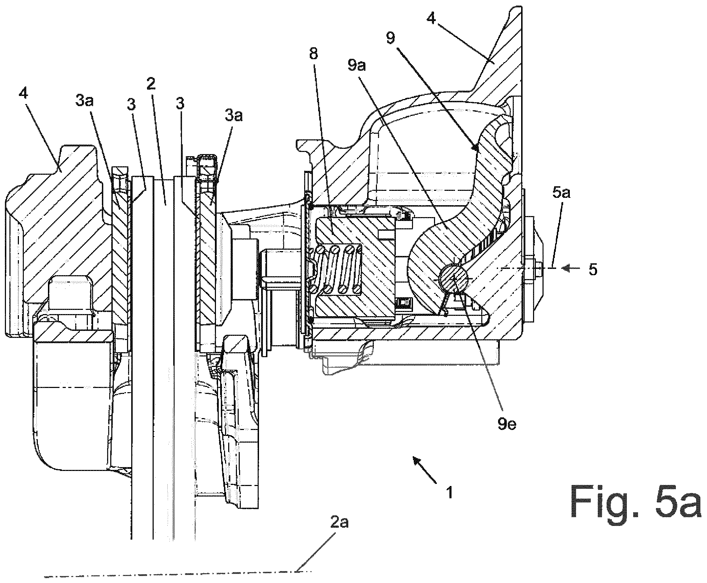

Die Scheibenbremse 1 weist eine Bremsscheibe 2 mit einer Bremsscheibenachse 2a auf. Die Bremsscheibe 2 ist von einem, hier als Schwimmsattel ausgeführten, Bremssattel 4 übergriffen. Beiderseits der Bremsscheibe 2 ist ein Bremsbelag 3 mit jeweils einem Bremsbelagträger 3a angeordnet, wobei hier nur der zuspannseitige Bremsbelag 3 mit seinem Bremsbelagträger 3a gezeigt ist. Der reaktionsseitige Bremsbelag ist hier nicht dargestellt, aber weiter unten in Fig. 4, 4a, 5, 5a gezeigt. In diesem Ausführungsbeispiel ist die Scheibenbremse 1 als zweistempelige Bremse mit zwei Spindeleinheiten 5 und 5' ausgebildet. Jede Spindeleinheit 5, 5' weist einen Gewindestempel 6, 6' auf, der als Vollwelle ausgebildet ist.

Der zuspannseitige Bremsbelagträger 3a steht mit den Spindeleinheiten 5, 5' über Druckstücke 6e, 6'e, die an Enden der Gewindestempeln 6, 6' angeordnet sind, in Verbindung. Der andere, reaktionsseitige Bremsbelagträger 3a ist auf der anderen Seite der Bremsscheibe im Bremssattel 4 festgelegt, was z.B. aus den Figuren 4, 4a, 5 und 5a hervorgeht. Die Gewindestempel 6, 6' sind jeweils in einer Traverse 8, die auch als Brücke bezeichnet wird, in Gewinden 6d, 6'd verdrehbar angeordnet.

Die Gewindestempel 6, 6' weisen jeweils ein zuspannseitiges Ende 6a, 6'a und ein belagseitiges Ende 6b, 6b', das mit dem Druckstück 6e, 6'e in Verbindung steht und hier zapfenförmig ist, auf. Weiterhin sind die Gewindestempel 6, 6' jeweils mit einer Anzahl von Axialnuten 6c, 6'c versehen, welche sich in diesem Ausführungsbeispiel jeweils von dem zuspannseitigen Ende 6a, 6'a über etwa zwei Drittel der Länge des jeweiligen Gewindestempels 6, 6' in Richtung auf das jeweilige belagseitige Ende 6b, 6'b am jeweiligen Umfang des Gewindestempels 6, 6' in dessen Längsrichtung erstrecken. Fast die gesamte Länge des Gewindestempels 6, 6' bis auf die zapfenartigen Wellenenden 6b, 6'b ist mit einem Gewinde 6d, 6'd, d.h. Außengewinde, versehen. Die Gewindestempel 6, 6' sind mit ihren Gewinden 6d, 6'd in entsprechende Gewindebohrungen der Traverse 8 eingeschraubt.

Das Gewinde 6d, 6'd als Außengewinde an den Gewindestempel 6, 6' und als korrespondierendes Innengewinde in der Traverse 8 ist hier mit einer Steigung im Bereich der Selbsthemmung ausgeführt. Durch die Drehbewegung der Gewindestempel 6, 6' in der Traverse 8 ändert sich die Axialposition der Gewindestempel 6, 6' relativ zu der Traverse 8. Mit dem Begriff Axialposition ist hier eine Position der Gewindestempel 6, 6' in Axialrichtung der Bremsscheibenachse 2a und der Achsen 5a, 5'a gemeint.

Die Traverse 8 und somit die Gewindestempel 6, 6' sind von einer Zuspannvorrichtung, hier ein Bremsdrehhebel 9 mit einer Schwenkachse 9e (siehe Fig. 5, 5a) rechtwinklig zu der Bremsscheibenachse 2a (siehe Fig. 5, 5a) der Bremsscheibe 2 betätigbar. Der Bremsdrehhebel 9 weist einen Hebelkörper 9a auf, welcher hier über zwei Lagerabschnitte 9c, 9'c über jeweils einen Lagerbock 22, 22' mit der Traverse 8 in Zusammenwirkung steht. Dabei ist jeder Lagerbock 22, 22' mit einem Zentrieransatz 22a, 22'a versehen, welcher in der Traverse 8 in jeweils einer Aufnahme 8b, 8'b eingesetzt ist. Hier ist jeder Zentrieransatz 22a, 22'a zapfenförmig ausgebildet. Dabei ist jede Aufnahme 8b, 8b' zum Bremsdrehhebel 9 hin geöffnet und in ihrer Länge parallel zu einer Längserstreckung der Traverse 8 größer als die Länge eines Zentrieransatzes 22a, 22'a eines Lagerbocks 22, 22'. Jeder Lagerbock 22, 22' steht über ein Schwenklager 22b, 22'b mit dem zugeordneten Lagerabschnitt 9c, 9'c des Bremsdrehhebels 9 in Wirkverbindung.

Die Traverse 8 ist in Richtung der Bremsscheibenachse 2a durch den Bremsdrehhebel 9 verstellbar. Eine Bewegung auf die Bremsscheibe 2 zu wird als Zuspannbewegung bezeichnet, und eine Bewegung in Gegenrichtung wird Lösebewegung genannt. Eine zuspannseitige Seite der Traverse 8 wird hier als Traversenoberseite 8c bezeichnet. Eine nicht weiter erläuterte Rückstellfeder 23 ist in der Mitte der Traverse 8 in einer entsprechenden Ausnehmung auf der belagseitigen Seite der Traverse 8 aufgenommen und stützt sich am Bremssattel 4 ab. Mittels der Rückstellfeder 23 wird die Traverse 8 bei der Lösebewegung in die in Fig. 1 gezeigt gelöste Stellung der Scheibenbremse 1 verstellt.

Ein Abstand zwischen den Bremsbelägen 3 und der Bremsscheibe 2 in der gelösten Stellung wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Bremsdrehhebels 9, vergrößert ist (siehe auch Fig. 4a und 5a).

Die Scheibenbremse 1 kann unterschiedliche Kraftantriebe aufweisen. Der Drehhebel 9 wird hier z.B. pneumatisch betätigt. Zu Aufbau und Funktion einer pneumatischen Scheibenbremse 1 wird auf die entsprechende Beschreibung der DE 197 29 024 C1 verwiesen.

Die Verschleißnachstellvorrichtung 11 ist zur Verschleißnachstellung eines vorher festgelegten Lüftspiels, das als Nominallüftspiel bezeichnet wird, ausgebildet. Unter dem Begriff "Nachstellung" ist eine Lüftspielverkleinerung zu verstehen. Das vorher festgelegte Lüftspiel ist durch die Geometrie der Scheibenbremse 1 bestimmt und weist ein so genanntes konstruktives Lüftspiel auf. Mit anderen Worten, die Verschleißnachstellvorrichtung 11 verkleinert ein vorhandenes Lüftspiel, wenn dieses in Bezug auf das vorher festgelegte Lüftspiel zu groß ist.
Die Verschleißnachstellvorrichtung 11 umfasst hier eine Nachstelleinrichtung 11a und eine Mitnehmereinrichtung 11b. Die Nachstelleinrichtung 11a ist an der einen Spindeleinheit 5 koaxial zu dieser, zu deren Gewindestempel 6 und einer Nachstellerachse 5a angeordnet. Die Bauteile und Funktionsgruppen der Nachstelleinrichtung 11a, welche unten noch ausführlich erläutert werden, sind auf einem Tragkörper 13 um diesen herum in axialer Richtung und somit in Richtung der Nachstellerachse 5a angeordnet. Dabei überdeckt die Nachstelleinrichtung 11a das zuspannseitige Ende 6a des zugehörigen Gewindestempels 6 und erstreckt sich zum belagseitigen Ende 6b des zugehörigen Gewindestempels 6 über ungefähr neun Zehntel der gesamten Länge der Axialnuten 6c des zugehörigen Gewindestempels 6 und ist in diesem Bereich um den Gewindestempel 6 herum angeordnet. Mit anderen Worten, die Nachstelleinrichtung 11a ist konzentrisch zu dem zugehörigen Gewindestempel 6 angeordnet und umschließt diesen zumindest teilweise. Außerdem ist ein weiterer Teil der Nachstelleinrichtung 11a in Verlängerung des zuspannseitigen Endes 6a des zugehörigen Gewindestempels 6 bis zu einer Lagerscheibe 12 angeordnet. Dieser letztere Bereich macht ungefähr ein Drittel der gesamten Länge in Richtung der Nachstellerachse 5a der Nachstelleinrichtung 11a aus. Mittels der nicht näher beschriebenen Lagerscheibe 12 ist die Nachstelleinrichtung 11a im Bremssattel 4 abgestützt bzw. eingesetzt.

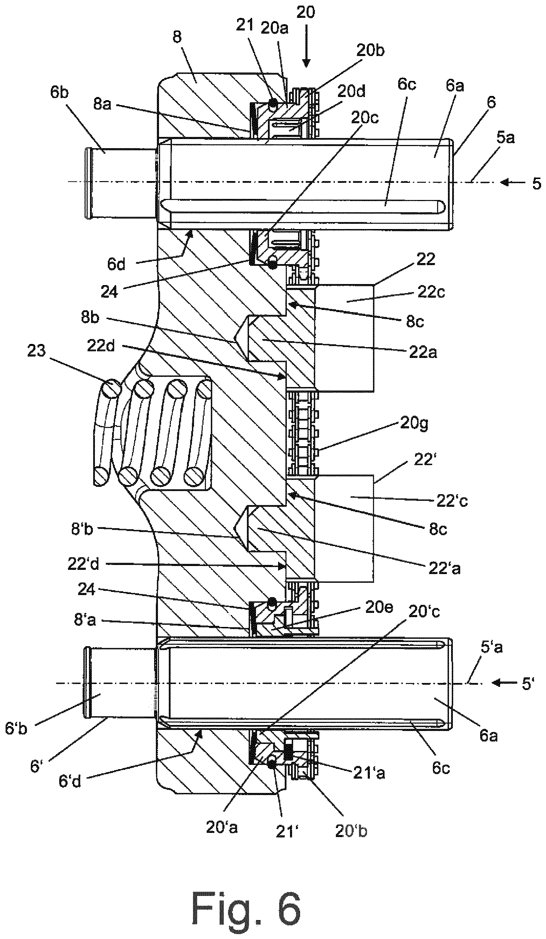

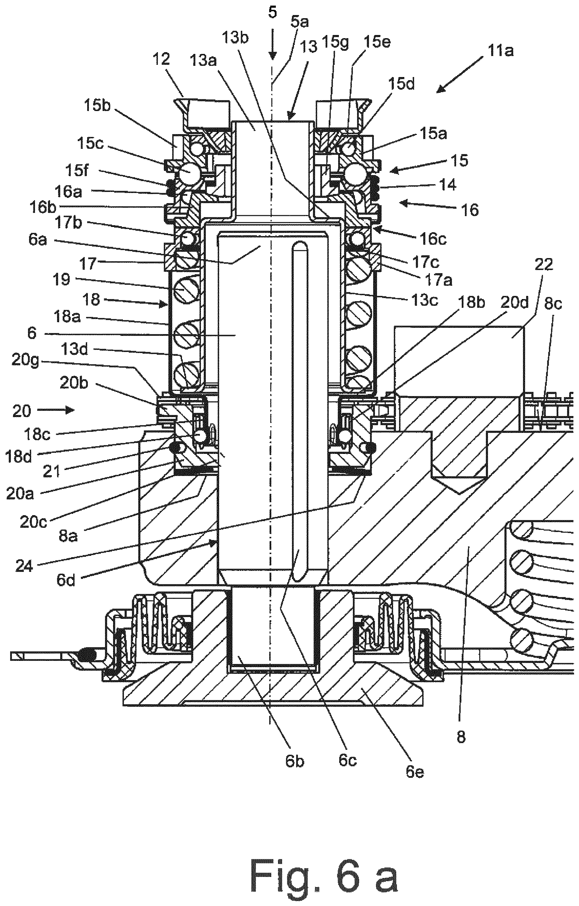

Die Nachstelleinrichtung 11a wird unten noch im Detail im Zusammenhang mit Fig. 6a weiter beschrieben.

Die Mitnehmereinrichtung 11b ist koaxial zu der anderen Spindeleinheit 5', zu deren Gewindestempel 6' und einer Mitnehmerachse 5'a angeordnet. Im Gegensatz zu dem Gewindestempel 6 der Nachstelleinrichtung 11a ist das zuspannseitige Ende 6'a des Gewindestempels 6' der Mitnehmereinrichtung 11b in diesem Ausführungsbeispiel mit einem Profilansatz ausgebildet, auf welchem ein Aufsatz 7 mit einem Aufsatzabschnitt 7a drehfest aufgesetzt ist. Das andere, zuspannseitige Ende des Aufsatzes 7 ist als ein Betätigungsende 7b mit einem weiteren Profil zum Ansatz eines Werkzeugs zur Verstellung der Verschleißnachstellvorrichtung 11 bei Wartungsarbeiten ausgebildet. Um den Aufsatz 7 herum ist ein nicht näher erläutertes Einsatzteil in Form eines Einbaugehäuses 7d zum Einsatz und zur Befestigung im Bremssattel 4 angeordnet und mit der Mitnehmereinrichtung 11b entsprechend verbunden bzw. bildet für diese eine Lagerung. Innerhalb des Einbaugehäuses 7d ist ein nicht näher beschriebener Sensor 7c eingebaut, welcher über den Aufsatz 7 mit dem Gewindestempel 6' drehfest gekoppelt ist. Ein Aufnehmerelement des Sensors kann z.B. ein Winkelsensor sein, z.B. ein Potentiometer, und erfasst die Winkellage des Gewindestempels 6' um die Mitnehmerachse 5'a. Die Auswertung dieser Winkellage lässt einen Rückschluss auf den Verschleißzustand der Bremsbeläge 3 und der Bremsscheibe 2 zu, denn der Gewindestempel 6' ist über eine unten noch näher erläuterte Synchroneinrichtung 20 mit dem Gewindestempel 6 gekoppelt. So dient der Sensor 7c zur Erfassung eines Nachstellwegs, d.h. des Verschleißzustands, und ist über nicht gezeigte Kabel (elektrisch oder optisch leitend) mit der Steuereinrichtung 100, welche die Auswertung vornehmen kann, verbunden.

Die Nachstellerachse 5a, die Mitnehmerachse 5'a und die Bremsscheibenachse 2a sind parallel zueinander angeordnet.

Die Nachstelleinrichtung 11a der Verschleißnachstellvorrichtung 11 steht über einen Antrieb 10 mit dem Drehhebel 9 in Zusammenwirkung. Der Antrieb 10 umfasst einen Betätiger 9b, welcher mit dem Bremsdrehhebel 9 verbunden ist, und ein Antriebselement 15a der Nachstelleinrichtung 11a. Der Betätiger 9b ist an seinem zuspannseitigen Ende mit einer Betätigungskontur 9c versehen, welche z.B. zahnförmig ist und mit einem Konturabschnitt 15b des Antriebselementes 15a der Nachstelleinrichtung 11a in Eingriff steht. Der Konturabschnitt 15b des Antriebselementes 15a korrespondiert mit der Betätigungskontur 9c des Betätigers 9b.

In unbetätigter Stellung, d.h. in Lösestellung, ist zwischen der Betätigungskontur 9c des Betätigers 9b und dem Konturabschnitt 15b des Antriebselementes 15a der Nachstelleinrichtung 11a ein Spiel vorgesehen. Dieses Spiel repräsentiert unter Berücksichtigung der Übersetzungsverhältnisse am Bremsdrehhebel 9 das konstruktive Lüftspiel der Scheibenbremse 1. Mit anderen Worten, eine Betätigung der Nachstelleinrichtung 11a erfolgt erst, nachdem die Traverse 8 bei einer Zuspannung der Scheibenbremse 1, d.h. bei Bremsbetätigung, um einen größeren Weg als das konstruktive Lüftspiel auf die Bremsscheibe 2 hin verschoben worden ist.

Die Nachstelleinrichtung 11a und die Mitnehmereinrichtung 11b sind durch die Synchroneinrichtung 20 derart gekoppelt, dass eine Verdrehbewegung des Gewindestempels 6 um die Nachstellerachse 5a eine entsprechende Verdrehbewegung des Gewindestempels 6' um die Mitnehmerachse 5'a bewirkt und umgekehrt. Die Synchroneinrichtung 20 ist hier auf der Traversenoberseite 8c der Traverse 8 zwischen der Traverse 8 und dem Bremsdrehhebel 9 angeordnet und umfasst ein Koppelrad 20a, das mit dem Gewindestempel 6 der einen Spindeleinheit 5 und mit der Nachstelleinrichtung 11a gekoppelt ist, ein weiteres Koppelrad 20'a, das mit der Gewindestempel 6' der anderen Spindeleinheit 5' und mit der Mitnehmereinrichtung 11b gekoppelt ist, und ein Synchronmittel 20g, mit welchem die Koppelräder 20a und 20'a gekoppelt sind. In diesem Ausführungsbeispiel ist das Synchronmittel 20g ein Zugmittel, vorzugsweise eine Kette. So sind die Koppelräder 20a, 20'a als Kettenräder ausgebildet. Damit ist eine synchrone Bewegung der Gewindestempel 6, 6' der Spindeleinheiten 5 und 5' bei Verschleißnachstellvorgängen (Antrieb durch die Nachstelleinrichtung 11a) und Einstellungen bei Wartungsarbeiten, z.B. Belagwechsel, (manueller Antrieb über das Betätigungsende 7b der Mitnehmereinrichtung 11b) gewährleistet.

Jedes Koppelrad 20a, 20'a ist ortsfest in einer mit dem jeweils zugeordneten Koppelrad 20a, 20'a korrespondierenden Aufnahme 8a, 8'a in der Traverse 8 drehbar aufgenommen. Die Aufnahmen 8a, 8'a weisen hier mit ihren Öffnungen zur Zuspannseite der Scheibenbremse 1, d.h. sie sind von der Traversenoberseite 8c in die Traverse 8 eingeformt.

Jedes Koppelrad 20a, 20'a weist einen Körper auf, der zuspannseitig hohlzylinderförmig ausgebildet ist. An dem zuspannseitigen Endumfang ist jeweils ein Synchronabschnitt 20b, 20'b angeformt, der in diesem Ausführungsbeispiel eine Verzahnung für einen Kette als Synchronmittel 20g ausgebildet ist. Der Synchronabschnitt 20b, 20'b (hier der Zahnkranz des Kettenrads) ist von dem Synchronmittel 20g, der Kette, in einem Winkel von ungefähr 180° umschlungen und steht mit diesem in Eingriff.

Zunächst wird das Koppelrad 20a, das der Spindeleinheit 5 mit der Nachstelleinrichtung 11a zugeordnet ist, beschrieben. Der hohlzylinderförmige Körper des Koppelrads 20a ist an seiner Innenwand mit einem sich axial erstreckenden Innenprofil 20d (siehe auch Fig. 6) ausgebildet, welches mit dem belagseitigen Ende der Nachstelleinrichtung 11a zusammenwirkt, was unten im Zusammenhang mit Fig. 6 noch näher beschrieben wird. Das belagseitige Ende des hohlzylinderförmigen Körpers des Koppelrads 20a ist mit einem innen liegenden Eingriffsabschnitt 20c versehen, welcher hier Nocken aufweist, die mit den Axialnuten 6c des zugehörigen Gewindestempels 6 korrespondieren und mit diesen in Eingriff stehen. Der hohlzylinderförmige Körper des Koppelrads 20a ist hier zu etwa zwei Drittel in der zugehörigen Ausnehmung 8a der Traverse 8 aufgenommen, wobei der Außendurchmesser des hohlzylinderförmigen Körpers des Koppelrads 20a mit dem Innendurchmesser der Ausnehmung 8a der Traverse 8 korrespondiert. Eine axiale Festlegung des hohlzylinderförmigen Körpers des Koppelrads 20a und somit des Koppelrads 20a selbst in der Ausnehmung 8a der Traverse 8 ist hier durch ein Sicherungselement 21, z.B. ein Seegerring, realisiert. Das Sicherungselement 21 ist in einer radialen Nut in der Ausnehmung 8a festgelegt.

Auch das Koppelrad 20'a, das mit dem Gewindestempel 6' der anderen Spindeleinheit 5' mit der Mitnehmereinrichtung 11b gekoppelt ist, weist einen ähnlichen hohlzylinderförmigen Körper wie das Koppelrad 20a auf. Im Unterschied zu dem Koppelrad 20a ist in diesen hohlzylinderförmigen Körper des Koppelrads 20'a ein ringförmiges Einsatzelement 20e, welches auch als Synchronisationsring bezeichnet wird, eingesetzt, über ein nicht näher beschriebenes Sicherungselement 21' axial und über eine nicht näher gezeigte Profilierung, beispielsweise eine Kerbverzahnung mit entsprechend feiner Verzahnung 20f, radial in dem hohlzylinderförmigen Körper des Koppelrads 20'a festgelegt. Aufgrund der radialen Profilfestlegung des Einsatzelementes 20e kann eine Einstellung der Synchroneinrichtung 20 erfolgen. Wenn bei der Montage der Scheibenbremse 1 beide Gewindestempel 6, 6' in die gleiche Axialposition relativ zur Traverse 8 bewegt worden sind, wird das Einsatzelement 20e als Synchronisationsring in das Koppelrad 20'a eingesetzt. Das Einsatzelement 20e weist den Eingriffsabschnitts 20'c zum Eingriff in den Axialnuten 6'c des zugehörigen Gewindestempels 6' auf.

Die Eingriffsabschnitte 20c, 20'c ermöglichen eine drehfeste Kopplung der Koppelräder 20a, 20'a mit den zugehörigen Gewindestempels 6, 6' der Spindeleinheiten 5, 5', Gleichzeitig wird durch die Axialnuten 6c, 6'c erreicht, dass die mit ihnen in Eingriff stehenden Nocken der Eingriffsabschnitte 20c, 20'c in den relativ zu den Axialnuten 20c, 20'c in Richtung der Nachstellerachse 5a bzw. der Mitnehmerachse 5'a axial verschiebbar geführt sind. Auf diese Weise wird eine axiale Verstellung der Gewindestempel 6, 6' bei Nachstellung relativ zu der Traverse 8 aufgrund der Gewinde 6d, 6'd nicht behindert.

Das Synchronmittel 20g, hier die Kette, der auf der Traverse 8 angeordneten Synchroneinrichtung 20 ist auf der Oberseite 8c der Traverse 8 angeordnet und geführt, wobei das Synchronmittel in Längsrichtung der Traverse 8 an den Längsseiten der Lagerböcke 22, 22' ebenfalls geführt und in Richtung der Drehachse der Bremsscheibe 2 gehalten ist.

Die Kopplung des Koppelrads 20a mit der Nachstelleinrichtung 11a wird im Zusammenhang mit Fig. 6a noch weiter erläutert. Die Kopplung des anderen Koppelrads 20'a mit der Mitnehmereinrichtung 11b wird noch im Zusammenhang mit Fig. 4-4a beschrieben.

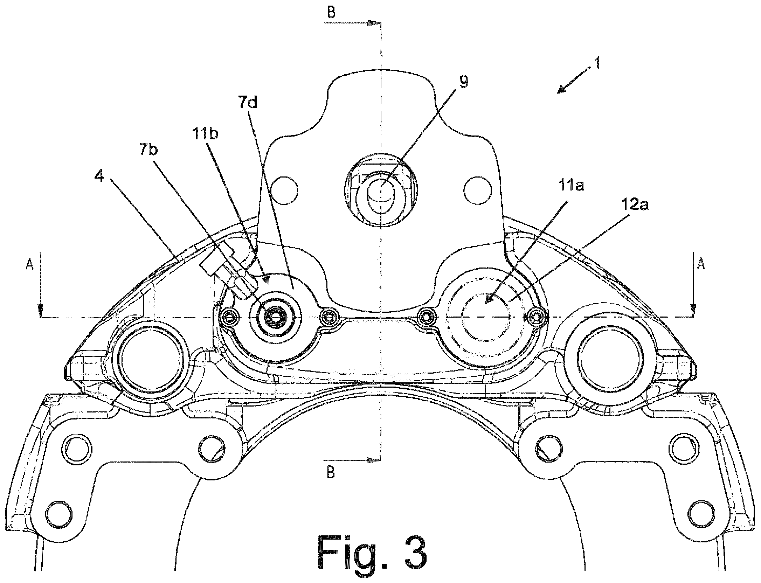

Fig. 3 zeigt eine schematische Ansicht einer Variante der erfindungsgemäßen Scheibenbremse 1 nach Fig. 1 von der Zuspannseite her. Fig. 4 und 4a stellen schematische Schnittansichten der Variante der erfindungsgemäßen Scheibenbremse 1 längs der Linie A-A nach Fig. 2 in verschiedenen Verschleißzuständen der Scheibenbremse 1 dar. Und Fig. 5-5a zeigen schematische Schnittansichten der Variante der erfindungsgemäßen Scheibenbremse 1 längs der Linie B-B nach Fig. 2 in verschiedenen Verschleißzuständen.

In Fig. 4 und Fig. 5 ist die Scheibenbremse 1 in einem Verschleißzustand gezeigt, in welchem die Bremsbeläge 3 und die Bremsscheibe 2 neu oder nur wenig verschlissen sind. Im Gegensatz dazu zeigen Fig. 4a und Fig. 5a einen hohen Verschleißzustand der Bremsbeläge 3 und der Bremsscheibe 2. Dabei ist eine Nachstellung durch die Verschleißnachstellvorrichtung 11 eindeutig zu erkennen, wobei die Gewindestempel 6, 6' zu mehr als zwei Drittel ihrer Länge belagseitig aus der Traverse 8 herausgeschraubt sind.

In Fig. 3 ist die Zuspannseite der Scheibenbremse 1 gezeigt, wobei in dieser Variante die Nachstelleinrichtung 11a rechts und die Mitnehmereinrichtung 11b links in der Zeichnung angeordnet ist. An der Mitnehmereinrichtung 11b ist eine Kabeleinführung für das Kabel des Sensors 7c zu erkennen, die nicht näher beschrieben wird. Die Erzeugung der Zuspannkraft erfolgt über den Bremsdrehhebel 9, der als Exzenterhebel ausgebildet ist. An der gezeigten Zuspannseite des Bremssattels 4 ist ein nicht näher bezeichneter Anschlussflansch z.B. für einen Pneumatikzylinder zu erkennen, welcher mit einem längeren von zwei Hebelarmen des Bremsdrehhebels 9 zusammenwirkt. Die Hebelarme sind nicht näher bezeichnet, aber leicht vorstellbar. Dies ist in den Figuren 5 und 5a dargestellt. Der Bremsdrehhebel 9 ist über ein Gleitlager in einer Verschwenkachse 9e im Bremssattel 4 verschwenkbar gelagert. Eine Krafteinleitung in den längeren Hebelarm des Bremsdrehhebels 9 erfolgt z.B. durch einen nicht gezeigten Pneumatikzylinder, dessen Betätigungsstößel am oberen Ende des Bremsdrehhebels 9 angreift und eine Kraft zur Zuspannung der Scheibenbremse 1 parallel zur Bremsscheibenachse 2a in den Bremsdrehhebel 9 einleitet. Die Kraftübertragung auf die Traverse 8 erfolgt über den kürzeren Hebelarm.

Durch die Traverse 8 wird über die Gewinde 6d, 6'd die Zuspannkraft auf die beiden Gewindestempel 6, 6' verteilt und über die Druckstücke 6e, 6'e auf den zuspannseitigen Bremsbelag 3 übertragen. Nach Überwinden des konstruktiven Lüftspiels auf der Zuspannseite stützt sich der zuspannseitige Bremsbelag 3 (in den Figuren 4, 4a, 5, 5a der rechte Bremsbelag 3) an der Bremsscheibe 2 ab und der Bremssattel 4, welcher in Richtung der Bremsscheibenachse 2a verschiebbar am Bremsträger (nicht näher gezeigt) gelagert ist, wird verschoben bis der reaktionsseitige Bremsbelag 3 (in den Figuren 4, 4a, 5, 5a der linke Bremsbelag 3) auch an der anderen Seite der Bremsscheibe 2 zur Anlage kommt.
In dieser Variante ist der reaktionsseitige Bremsbelag 3 mit seinem Bremsbelagträger 3a größer ausgeführt als der zuspannseitige Bremsbelag 3. Durch seine vergrößerte Fläche kann bei gleichem Verschleißvolumen die Dicke des Reibmaterials des Bremsbelags 3 reduziert werden. Dabei ergeben sich eine höhere Steifigkeit der gesamten Scheibenbremse 1 sowie eine reduzierte Kapazität der Verschleißnachstellung. Diese reduzierte Kapazität führt zu Bauraumvorteilen aufgrund kürzerer Gewindestempel und natürlich auch zur Gewichtsreduzierung.

In dieser Variante verlaufen die Axialnuten 6c, 6'c der Gewindestempel 6, 6' über die gesamte Länge der Gewindestempel 6, 6' zusammen mit dem Außengewinde 6d, 6'd.

In Fig. 4, 4a ist dargestellt, dass die Nachstelleinrichtung 11a der Verschleißnachstellvorrichtung 11 mit einem Deckel 12a über der Lagerscheibe 12, die im Bremssattel 4 mit der Nachstelleinrichtung 11a eingesetzt ist, an dem Bremssattel 4 befestigt ist.

Die Mitnehmereinrichtung 11b weist im Unterschied zu der in Fig. 2 gezeigten Ausführung einen unterschiedlich gestalteten Aufsatz 7 auf. Damit ist es möglich, dass die Gewindestempel 6 und 6' in gleicher Ausführung hergestellt werden können. Und zwar ist der Aufsatz 7 in Gestalt einer Hülse ausgeführt, deren Aufsatzabschnitt 7a konzentrisch zum Gewindestempel 6' um diesen herum angeordnet und an dem Koppelrad 20'a verdrehsteif angebunden ist. Diese Hülse des Aufsatzes 7 verfügt über eine Verbindung, z.B. eine in einfacher Weise zusammensteckbare drehfeste Kupplung, zu dem Betätigungsende 7b, welches nach außen geführt ist (siehe Fig. 3) und gleichzeitig eine drehfeste Kopplung mit dem Sensor 7c (siehe Fig. 2) bildet.

In Fig. 6 ist eine vergrößerte Schnittansicht der Traverse 8 der erfindungsgemäßen Scheibenbremse 1 nach Fig. 4 und der erfindungsgemäßen Synchroneinrichtung 20 dargestellt.

Es ist deutlich erkennbar, dass die Koppelräder 20a und 20'a an der Traverse 8 ortsfest und drehbar in den Aufnahmen 8a, 8'a angeordnet und in ihren jeweiligen Aufnahmen 8a, 8'a der Traverse 8 jeweils mit einem Sicherungselement 21, 21' axial festgelegt sind. Außerdem ist zwischen der Unterseite mit dem Eingriffsabschnitt 20c des Koppelrads 20a und dem Boden der Aufnahme 8a eine Axialfeder 24, z.B. eine Tellerfeder, angeordnet, wodurch eine definierte Lage des Koppelrads 20a zum Synchronmittel 20g geschaffen ist und eine Sitzfestigkeit und Verdrehsicherung zwischen den Koppelrädern 20a, 20'a und der Traverse 8 gewährleistet wird. Durch die entstehenden Reibkräfte wird ein definiertes Haltemoment erzeugt. Dies ist auch bei dem anderen Koppelrad 20'a der Fall, wobei die Axialfeder 24 hier gegen das Koppelrad 20'a und das Einsatzelement 20e drücken.

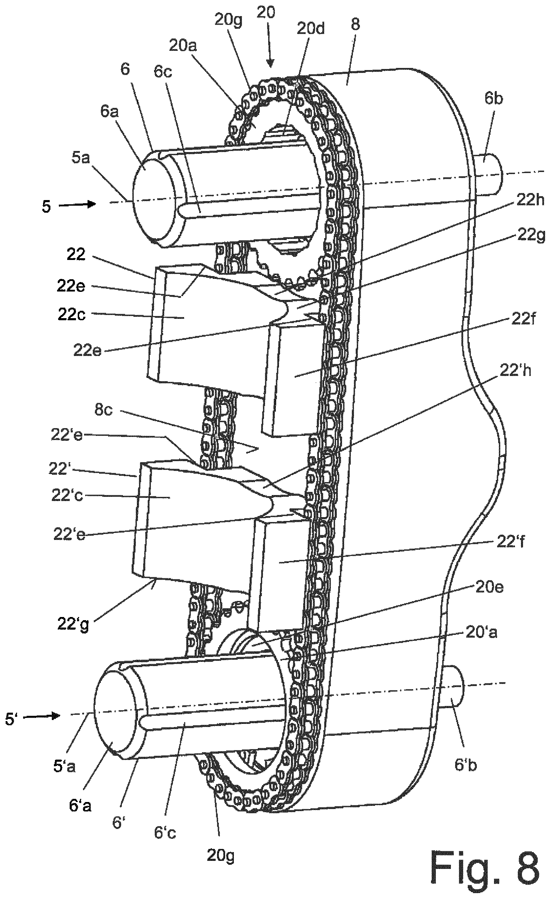

Die Lagerböcke 22, 22' sind hier ohne den auf ihnen gelagerten Bremsdrehhebel 9 gezeigt. Sie weisen Lagerflächen 22c, 22'c auf, die zur Lagerung der Schwenklager 22b, 22b' für die Lagerabschnitte 9d, 9'd des Hebelkörpers 9a des Bremsdrehhebels 9 dienen (siehe Fig. 2). Die Lagerflächen 22c, 22'c sind mit einem im Wesentlichen halbkreisförmigen Querschnitt versehen, wie aus den Fig. 8, 9 und 12 ersichtlich ist. Die Lagerböcke 22, 22' sind mit ihren Zentrieransätzen 22a, 22'a in den Aufnahmen 8b, 8'b der Traverse 8 eingesetzt, wobei Auflageflächen 22d, 22'd der Lagerböcke 22, 22' an ihren Unterseiten auf der Traversenoberseite 8c aufliegen.

Die Traverse 8 kann mit den Gewindestempeln 6, 6' und der Synchroneinrichtung 20 als vormontierte und synchronisierte Einheit (modularisiertes Montagekonzept) ausgeführt werden. Als vormontierte Einheit ist die Traverse 8 dann austauschbar. Eine Synchronisation kann somit bereits vor einer Endmontage erfolgen und muss nicht vor Ort vorgenommen werden.

Dadurch dass die Synchroneinrichtung 20 auf der Traverse 8 angeordnet ist, wird der Schwenkweg des Bremsdrehhebels 9 innerhalb der Scheibenbremse 1 kaum behindert. Der Bauraum für den Bremsdrehhebel 9 bleibt also nahezu unverändert im Vergleich zu einer außen am Bremssattel 4 angebrachten Synchronisation.

Fig. 6a zeigt eine vergrößerte Schnittansicht der Nachstelleinrichtung 11a nach Fig. 4.

Unter dem Begriff "oben" bzw. "Oberseite" ist die Seite des jeweiligen Bauteils zu verstehen, welche im eingebauten Zustand in der Scheibenbremse 1 zur Zuspannseite weist. Die "Unterseite" des jeweiligen Bauteils bzw. "unten" weist dann zur Bremsscheibe 2.

Die Nachstelleinrichtung 11a umfasst die Lagerscheibe 12, den Tragkörper 13, das Antriebselement 15a, eine Kugelrampenkupplung 16 mit einer Überlastkupplung 16c, die als Rutschkupplung ausgeführt ist, ein Druckelement 17, ein Abtriebselement 18 und mindestens ein Kraftspeicherelement 19.

Die Lagerscheibe 12 ist z.B. in dem Dokument DE 10 2004 037 771 A1 beschrieben. Sie dient zur Lagerung und Abstützung der Nachstelleinrichtung 11a am Bremssattel 4 dergestalt, dass sie einerseits in einem oberen Endbereich eines Lagerabschnitts 13a des Tragkörpers 13 angebracht ist und andererseits eine Lagerung für das Antriebselement 15a bildet.

Der Tragkörper 13 ist in Hülsengestalt mit dem oberen Lagerabschnitt 13a und einem Aufnahmeabschnitt 13c gebildet. Der Lagerabschnitt 13a weist einen geringeren Außendurchmesser auf als der Aufnahmeabschnitt 13c und ist mit diesem über eine Schulter 13b verbunden. Eine axiale Länge des Lagerabschnitts 13a des Tragkörpers 13 beträgt ungefähr ein Drittel der Gesamtlänge des Tragkörpers 13, wobei eine Gesamtlänge der Nachstelleinrichtung 11a etwa die Gesamtlänge des Tragkörpers 13 plus ungefähr ein Viertel der Gesamtlänge des Tragkörpers 13 aufweist. Ein Innendurchmesser des Aufnahmeabschnitts 13c ist so groß ausgeführt, dass der Aufnahmeabschnitt 13c des Tragkörpers 13 den zugehörigen Gewindestempel 6 zumindest teilweise umgibt. Ein unteres Ende des Aufnahmeabschnitts 13c weist eine sich radial nach außen erstreckende, kragenförmige Umbördelung auf, die als ein Auflageabschnitt 13d für das Kraftspeicherelement 19 dient.

Das Antriebselement 15a ist Bestandteil einer Kugelrampenkupplung 15 mit einem Freilauf 16 und weist beiderseits in Axialrichtung jeweils eine Wälzkörperanordnung auf. An der Oberseite ist das Antriebselement 15a dazu mit einer innen liegenden umlaufenden Wälzkörperlauffläche für Stützkugeln 15d ausgebildet, die mit einer an der Lagerscheibe 12 abgestützten Stützscheibe 15e eine obere Wälzkörperanordnung bilden. An der umlaufenden Außenseite des Antriebselementes 15a ist der Konturabschnitt 15b eingeformt. Der Konturabschnitt 15b kann z.B. eine Verzahnung sein, welche mit der Betätigungskontur 9c des Betätigers 9b des Bremsdrehhebels 9 korrespondiert. Der Konturabschnitt 15b erstreckt sich radial zur Nachstellerachse 5a und ist mit dem Antriebselement 15a an dem oberen Ende der Nachstelleinrichtung 11a angeordnet, wodurch in Bezug auf den Betätiger 9b für diesen ein langer Hebelarm möglich ist (siehe z.B. Fig. 2).

Die Wälzkörperanordnung an der Unterseite des Antriebselementes 15a wird von Rampenkugeln 15c und einem Rampenring 15f der Kugelrampenkupplung 15 gebildet. Sowohl die Unterseite des Antriebselementes 15a als auch die ihr gegenüberliegende Oberseite des Rampenrings 15f sind mit nicht näher dargestellten Kugelrampen für die Rampenkugeln 15c ausgebildet, die zwischen dem Antriebselement 15a und dem Rampenring 15f angeordnet sind. Der Rampenring 15f und das Antriebselement 15a sind weiterhin mittels eines elastischen Kopplungselementes 14, beispielsweise eine Schlingfeder, gekoppelt. Das elastische Kopplungselement 14 wirkt einerseits auf die Kugelrampenkupplung 15 derart ein, dass die Rampenkugeln 15c in den Kugelrampen in einer bestimmten Position stehen bzw. in eine solche gestellt werden. Andererseits wirkt das elastische Kopplungselement 14 auf den Freilauf 16 zur Spielverringerung ein.

Der Freilauf 16 umfasst den Rampenring 15f, Freilaufkugeln 16a und einen Abtriebsring 16b. Die Freilaufkugeln 16a sind zwischen der Unterseite des Rampenrings 15f, die von einem sich axial nach unten erstreckenden Kragen mit konischer Innenseite umlaufend umgeben ist, und einer konischen Außenseite des Abtriebsrings 16b in nicht näher dargestellter Weise mit Bildung einer Freilauffunktion angeordnet, wodurch eine Relativbewegung zwischen dem Rampenring 15f und dem Abtriebsring 16b in "Durchlassrichtung" ermöglicht ist.

Die Kugelrampenkupplung 15 mit dem Freilauf 16 umfasst somit das Antriebselement 15a, Rampenkugeln 15c, den Rampenring 15f, die Freilaufkugeln 16a und den Abtriebsring 16b.

An dem unteren Ende des Abtriebsrings 16b ist ein sich radial nach außen erstreckender Flansch angeordnet. Der sich axial nach unten erstreckenden Kragen des Rampenrings 15f überdeckt den Abtriebsring 16b außen zu etwa zwei Drittel in Axialrichtung. Der untere Rand dieses Kragens und der äußere umlaufende Rand des Flansches des Abtriebsrings 16b sind mit einem nicht näher bezeichneten Dichtkragen nach außen hin abgedichtet.

Die Oberseite des Abtriebsrings 16b erstreckt unterhalb des Rampenrings 15f radial nach innen und steht mit einer Unterseite eines Flansches einer Stützhülse 15g in Kontakt. Die Stützhülse 15g erstreckt sich von diesem Flansch ausgehend axial nach oben, wobei ihre Außenwand zwischen dem Lagerabschnitt 13a des Tragkörpers 13 und den Innenseiten des Rampenrings 15f und des Antriebselementes 15a angeordnet ist. Ein Teil des Außenumfangs des Flansches der Stützhülse 15g zentriert den Rampenring 15f

Der Abtriebsring 16b weist eine innere Ausdrehung auf, deren Innendurchmesser mit dem Außendurchmesser des Aufnahmeabschnitts 13c des Tragkörpers 13 korrespondiert und die Schulter 13b des Tragkörpers 13 aufnimmt.

Die Lagerscheibe 12, das Antriebselement 15a mit seinen beidseitigen Wälzlageranordnungen (Stützkugeln 15d und Kugelrampenkupplung 15), dem Kopplungselement 14 und dem Freilauf 16 sowie die Stützhülse 15g sind um den Lagerabschnitt 13a des Tragkörpers 13 herum in Reihe angeordnet.

Unter dem Flansch des Abtriebsrings 16b ist ein Druckelement 17 angeordnet. Das Druckelement 17 weist eine abgestufte, hohlzylinderförmige Gestalt mit einem sich nach innen radial erstreckenden Rand auf, dessen Oberseite mit der Unterseite des Flansches des Abtriebsrings 16b in Kontakt steht und eine Überlastkupplung 16c bildet. Dieser obere Rand des Druckelementes 17 ist mit einer axialen Bohrung versehen, die einen Innendurchmesser aufweist, der mit dem Außendurchmesser des Aufnahmeabschnitts 13c des Tragkörpers 13 korrespondiert. Das Druckelement 17 ist damit auf dem Aufnahmeabschnitt 13c in Axialrichtung verschiebbar zentriert.

Von diesem oberen Rand des Druckelementes 17 erstreckt sich in Axialrichtung ein kurzes Stück Zylinderwand nach unten, welches dann in einer Abstufung in einen sich weiter in Axialrichtung nach unten erstreckenden Kopplungsabschnitt 17a größeren Durchmessers übergeht. Die axiale Länge des Kopplungsabschnitts 17a ist etwa doppelt so groß wie die axiale Länge der darüber angeordneten Zylinderwand.

Unterhalb des oberen Rands des Druckelementes 17 ist eine Wälzkörperlauffläche vorgesehen, welche mit Druckkugeln 17b in Kontakt steht. Die Druckkugeln 17b sind radial von dem kurzen Stück Zylinderwand des Druckelementes 17 begrenzt und stehen unten mit einer Druckscheibe 17c in Kontakt. Zwischen der Unterseite der Druckscheibe 17c und dem Auflageabschnitt 13d des Tragkörpers 13 ist das Kraftspeicherelement 19 angeordnet, welches hier als Druckfeder ausgeführt ist. Die oberste Windung des Kraftspeicherelementes 19 ist unter der Druckscheibe 17c in dem Druckelement 17 von dessen umlaufenden Kopplungsabschnitt 17a aufgenommen.

Das Kraftspeicherelement 19 erzeugt eine Axialkraft zwischen dem Auflageabschnitt 13d des Tragkörpers 13 und der Stützscheibe 15e, die mit der Lagerscheibe 12 und über diese mit dem oberen Ende des Tragkörpers 13 verbunden ist. Auf diese Weise werden die Funktionselemente der Nachstelleinrichtung 11a zusammengedrückt. Außerdem erfolgt durch das Kraftspeicherelement 19 eine Vorspannung der Kugelrampenkupplung 16 und der Überlastkupplung 16c.

Die Unterseite des Kopplungsabschnitts 17a des Druckelementes 17 ist mit dem oberen Abschnitt des Abtriebselementes 18 verbunden. Das Abtriebselement 18 ist ähnlich wie der Tragkörper 13 in Hülsengestalt mit zwei zylindrischen Abschnitten 18a, 18c gebildet, die über einen Schulterabschnitt 18b verbunden sind, wobei der obere zylindrische Abschnitt als ein Abtriebskopplungsabschnitt 18a einen größeren Durchmesser aufweist als der unten zylindrische Abschnitt, der als Abtriebsabschnitt 18c bezeichnet ist. Mit anderen Worten, das Abtriebselement 18 ist im Gegensatz zum Tragkörper 13 um 180° um die Horizontale gedreht angeordnet und überdeckt mit seinem Abtriebskopplungsabschnitt 18a den Aufnahmeabschnitt 13c des Tragkörpers 13 zu mehr als drei Viertel der Länge des Aufnahmeabschnitt 13c des Tragkörpers 13. Die axiale Länge des Abtriebskopplungsabschnitt 18a beträgt ungefähr drei Viertel der Länge des Aufnahmeabschnitt 13c des Tragkörpers 13, und die axiale Länge des Abtriebsabschnitts 18c des Abtriebselementes 18 beträgt etwa ein Drittel der Länge des Abtriebskopplungsabschnitt 18a des Abtriebselementes 18. Dabei ist das Kraftspeicherelement 19 zwischen der Außenseite des Aufnahmeabschnitts 13c und der Innenseite des Abtriebskopplungsabschnitt 18a angeordnet. Der Schulterabschnitt 18b des Abtriebselementes 18 liegt unterhalb des Auflageabschnitts 13d des Aufnahmeabschnitt 13c des Tragkörpers 13.

Der Abtriebsabschnitt 18c des Abtriebselementes 18 erstreckt sich in den Innenraum des Koppelrads 20a mit einem radialen Abstand zu dem Innenprofil 20d des Koppelrads 20a. Im unteren Endbereich des Abtriebsabschnitt 18c sind in diesem Ausführungsbeispiel nicht näher bezeichnete Aufnahmen eingeformt, in welchen jeweils ein Übertragungselement 18d, hier sind die Übertragungselemente 18d als Kugeln ausgebildet, beweglich angeordnet ist. Die Übertragungselemente 18d stellen einerseits einen Eingriff mit dem Abtriebselement 18b und andererseits einen Eingriff mit dem Innenprofil 20d des Koppelrads 20a her. Auf diese Weise ist eine drehfeste Kopplung des Abtriebselementes 18 mit dem Koppelrad 20a gebildet. Außerdem bildet diese Art Kopplung ein kardanisches Gelenk, wodurch Schwenk- und Vertikalbewegungen der Traverse 8 ausgeglichen werden.

Das Koppelrad 20a wiederum steht mit dem Eingriffsabschnitt 20c, der hier mehrere Nocken aufweist, seiner Unterseite mit den Axialnuten 6c des Gewindestempels 6 in drehfestem Eingriff, wobei eine relative axiale Bewegung zwischen dem Koppelrad 20a und somit zwischen der Traverse 8 und dem Gewindestempel 6 ermöglicht ist. Dies ist auch zwischen dem Koppelrad 20'a und dem Gewindestempel 6' wie oben bereits beschrieben der Fall, wobei die Koppelräder 20a und 20'a über ihre Synchronabschnitte 20b mittels des Synchronmittels 20g, hier eine Kette, gekoppelt sind.

Mit anderen Worten, die Nachstelleinrichtung 11a ist über das Koppelrad 20a mit dem Gewindestempel 6 und über die Kette (Synchronmittel 20g) der Synchroneinrichtung 20 über das andere Koppelrad 20'a mit dem anderen Gewindestempel 6' der Mitnehmereinrichtung 11b formschlüssig gekoppelt.
Das Koppelrad 20a (und ebenfalls das andere Koppelrad 20'a) ist an der Traverse 8 ortsfest und drehbar angeordnet. In Fig. 6 ist dargestellt, dass das Koppelrad 20a in der Aufnahme 8a der Traverse 8 eingesetzt und mit dem Sicherungselement 21 axial festgelegt ist. Außerdem ist zwischen der Unterseite mit dem Eingriffsabschnitt 20c des Koppelrads 20a und dem Boden der Aufnahme 8a eine Axialfeder 24, z.B. eine Tellerfeder, angeordnet, wodurch eine definierte Lage des Koppelrads 20a zum Synchronmittel 20g geschaffen ist.

So ist es auch möglich, dass die Nachstelleinrichtung 11a ausgetauscht werden kann, ohne die Synchroneinrichtung 20 auszubauen, denn der Abtriebsabschnitt 18c kann aus dem Koppelrad 20a in einfacher Weise herausgezogen und wieder eingesteckt werden.

Im Folgenden wird die Funktionsweise der Nachstelleinrichtung 11a erläutert.

Bei jeder Zuspannbewegung des Bremsdrehhebels 9 (Fig. 4, 4a, 5, 5a) wird über den mit dem Bremsdrehhebel 9 verbundenen Betätiger 9b mittels der Betätigungskontur 9c, die mit dem Konturabschnitt 15b des Antriebselementes 15a der Nachstelleinrichtung 11a in Eingriff steht, zunächst das konstruktive Lüftspiel durchlaufen und dann über das Antriebselement 15a um die Nachstellerachse 5a in einer bestimmten Drehrichtung, beispielsweise im Uhrzeigersinn, verdreht. Diese Drehbewegung wird über die Richtungskupplung, d.h. den Freilauf, die/der hier durch die Schlingfeder als Kopplungselement 14 realisiert ist, auf den Antriebsring 15f übertragen.

In dem Fall, in welchem eine Nachstellung des Lüftspiels erforderlich geworden ist, wird diese Drehbewegung des Antriebselementes 15a über die Kugelrampenkupplung 15 auf den Rampenring 15f übertragen. In dieser Drehbewegung sperrt der Freilauf 16 und wirkt als drehfeste Kupplung, derart, dass diese Drehbewegung weiter auf den Abtriebsring 16b übertragen wird.

Der Abtriebsring 16b seinerseits überträgt diese Drehbewegung über die Überlastkupplung 16c auf das Druckelement 17, welches mit dem Abtriebselement 18 drehfest verbunden ist. Mittels des Abtriebsabschnitts 18c des Abtriebselementes 18 wird durch die Übertragungselemente 18d, die hier als Kugeln ausgebildet sind, die Drehbewegung zur Nachstellung über das Innenprofil 20d auf das Koppelrad 20a übertragen. Das Koppelrad 20a ist seinerseits mit dem Gewindestempel 6 und über das Synchronmittel 20g mit dem anderen Koppelrad 20'a mit dem Gewindestempel 6' der Mitnehmereinrichtung 11b drehfest gekoppelt und überträgt so die Drehbewegung der Nachstelleinrichtung 11a auf die Gewindestempel 6, 6', welche in der Traverse 8 in den Gewinden zur Nachstellung des Bremsbelags 3 verdreht werden.

Sobald die Bremsbeläge 3 durch die Nachtstellbewegung an der Bremsscheibe 2 anliegen, werden die Gewindestempel 6, 6' in der Traverse 8 durch die dabei aufgebaute Spannkraft und daraus resultierende Reibkraft in den Gewinden 6d, 6'd in der Traverse 8 blockiert. Dann wird eine weitergehende Zustellbewegung durch den Bremsdrehhebel 9 über den Betätiger 9b auf das Antriebselement 15a zwar auch weiter übertragen, aber eine weitere Übertragung auf den Abtriebsring 16b mittels der Kugelrampenkupplung 16 unterbunden. Dabei bildet die Kugelrampenkupplung 15 eine Überlastkupplung.

Damit die so ausgeführte Nachstellung beim Lösen der Scheibenbremse 1 durch Zurückbewegen bzw. Zurückschwenken des Bremsdrehhebels 9 nicht wieder aufgehoben wird, wirkt nun der Freilauf 16 derart, dass in der Lösebewegung die Rückdrehbewegung des Antriebselementes 15a, in dem hier benutzten Beispiel im Gegenuhrzeigersinn, ausgelöst durch den Betätiger 9b nicht auf den Abtriebsring 16b übertragen wird, wobei das Antriebselement 15a gegenüber dem stillstehenden Abtriebsring 16b eine Relativdrehbewegung zurück im Gegenuhrzeigersinn ausführt.

In dem anderen Fall, in dem (noch) keine Nachstellung der Bremsbeläge 3 erforderlich ist, werden die Gewindestempel 6, 6' durch Anliegen der Bremsbeläge 3 an der Bremsscheibe 2 nach Durchlaufen des konstruktiven Lüftspiels sofort blockiert, und die Überlastkupplung gebildet durch die Kugelrampenkupplung 15 ermöglicht eine Verdrehung des Antriebselementes 15a relativ zu dem Rampenring 15f.

Die Überlastkupplung 16c ist insbesondere bei einem manuellen Rückstellen der Gewindestempel 6, 6' über das Betätigungsende 7b der Mitnehmereinrichtung 11b z.B. im Wartungsfall erforderlich (siehe z.B. Fig. 4, 4a). Dabei wird der Gewindestempel 6' über das Koppelrad 20'a durch den manuell verdrehten Aufsatz 7 verdreht. Diese Drehbewegung wird über das Synchronmittel 20g der Synchroneinrichtung 20 auf das Koppelrad 20a und den damit gekoppelten Gewindestempel 6 übertragen. Gleichzeitig wird aber auch durch die Kopplung der Übertragungselemente 18d zwischen Innenprofil 20d des Koppelrads 20a und dem Abtriebsabschnitt 18c das Abtriebselement 18 der Nachstelleinrichtung 11a entgegen einer Nachstelldrehbewegung (in dem Beispiel im Gegenuhrzeigersinn) verdreht. Da aber das Antriebselement 15a, das mit dem stillstehenden Betätiger 9b in Eingriff steht und somit blockiert ist, über die Kugelrampenkupplung 16 verdreht wird, erfolgt ein Auslösen der Überlastkupplung 16c und eine Entkopplung der manuellen Rückdrehbewegung des Gewindestempel 6 von dem blockierten Antriebselement 15a.

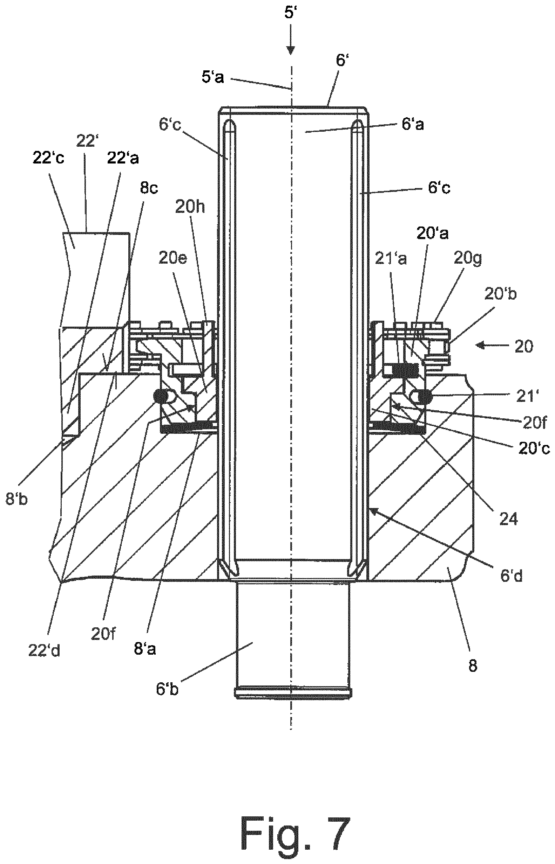

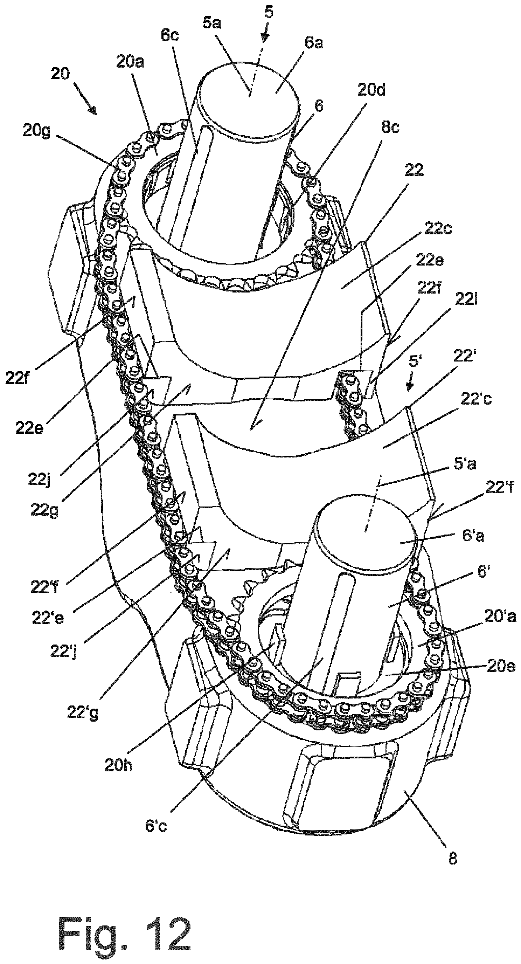

Fig. 7 zeigt eine schematische, vergrößerte Schnittansicht eines Abschnitts der Synchroneinrichtung nach Fig. 6, und zwar den Bereich der Spindeleinheit 5' mit der Mitnehmerachse 5'a. Das Einsatzelement 20e ist konzentrisch zu dem Koppelrad 20'a in diese in die Verzahnung 20f eingesetzt. Die Verzahnung 20f ist nur als Strich angedeutet. Das Einsatzelement 20e ist axial in dem Koppelrad 20'a durch das Sicherungselement 21'a gehalten, wobei die Axialfeder 24 das Einsatzelement 20e axial gegen das Sicherungselement 21'a drückt. In dieser Ausführung ist das Einsatzelement 20e zuspannseitig mit Verbindungslaschen 20h versehen (siehe auch Fig. 12), welche sich in Richtung der Mitnehmerachse 5'a nach oben erstrecken und zur Kopplung bzw. Verbindung mit dem Aufsatz 7 (siehe Fig. 4, 4a) vorgesehen sind.

Das Sicherungselement 21', welches das Koppelrad 20'a in der Aufnahme 8'a der Traverse axial festlegt, kann z.B. eine Art Federring sein, der auf das Koppelrad 20'a vor dem Einsetzen in die Aufnahme 8'a in der Nut im Außenumfang des Koppelrads 20'a eingedrückt wird und sich in Einsatzposition des Koppelrads 20'a in der Nut der Aufnahmewand durch seine Federkraft radial festsetzt. Dies gilt natürlich auch für das andere Koppelrad 20a.

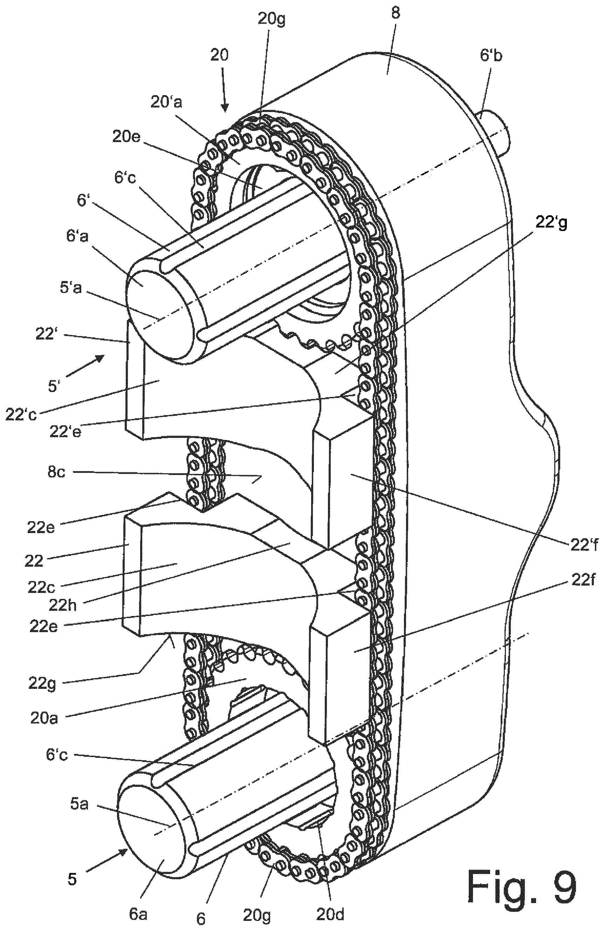

Fig. 8 und 9 stellen schematische Perspektivansichten der Traverse 8 mit der Synchroneinrichtung 20 nach Fig. 6 dar. Dabei ist in Fig. 8 die Spindeleinheit 5 für die Nachstelleinrichtung 11a oben und in Fig. 9 unten angeordnet.

Die Lagerflächen 22c, 22'c der Lagerböcke 22, 22' sind koaxial zu einer Achse angeordnet, welche parallel zu der Schwenkachse 9e des Bremsdrehhebels 9 liegt (siehe Fig. 5, 5a). Außerdem weisen die Lagerböcke 22, 22' beidseitig Seitenabschnitte 22f, 22'f auf, in deren unteren Bereichen Seitenausnehmungen 22e, 22'e über die jeweilige gesamte Länge in Richtung der Schwenkachse 9e auf. Die Seitenausnehmungen 22e, 22'e dienen zur Führung des Synchronmittels 20g, wie aus den Figuren 8 und 9 deutlich hervorgeht. Diese Führung des Synchronmittels 20g (hier der Kette) erfolgt einerseits senkrecht zur Längserstreckung des Synchronmittels 20g, d.h. senkrecht zur Traversenoberseite 8c und auch parallel zur Traversenoberseite 8c in Querrichtung der Lagerböcke 22, 22' bzw. in Querrichtung der Traverse 8.

In dieser Querrichtung verlaufen auch Stirnabschnitte 22g, 22'g der Lagerböcke 22, 22', welche jeweils mittig mit einer Ausnehmung 22h, 22'h versehen sind. Die Ausnehmungen 22h, 22'h liegen an den Stirnabschnitten 22g, 22'g den Koppelrädern 20a, 20'a gegenüber, wobei sie einen bestimmten Abstand der Synchronabschnitte 20b, 20'b der Koppelräder 20a, 20'a zu den Stirnabschnitten 22g, 22'g der Lagerböcke 22, 22' sicherstellen.

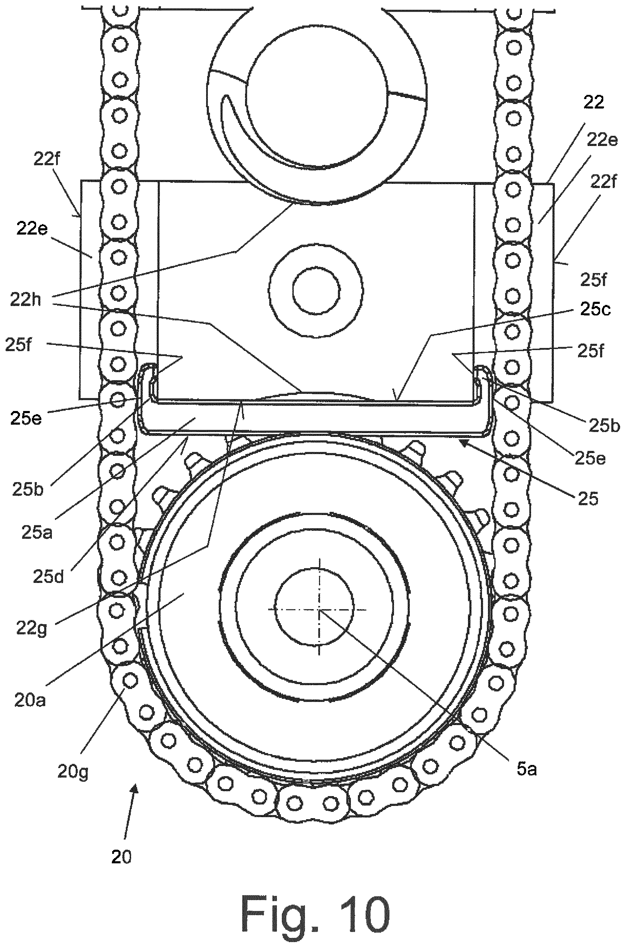

Fig. 10 zeigt eine vergrößerte Teilansicht der Synchroneinrichtung 20 nach Fig. 8 und 9, und Fig. 11 ist eine schematische Perspektivansicht eines Führungselementes 25 der Synchroneinrichtung 20 nach Fig. 10.

In Fig. 10 ist das Koppelrad 20a mit dem Synchronmittel 20g und dem benachbarten Lagerbock 22 in einer Ebene, die parallel zur Traversenoberseite 8c verläuft, geschnitten dargestellt. Es ist deutlich zu erkennen, dass die Kette, d.h. das Synchronmittel 20g das Koppelrad 20a in seiner Kettenradverzahnung (Synchronabschnitt 20b, siehe auch Fig. 6a in einem Winkel von etwa 180° umschlingt und beidseitig in den Seitenausnehmungen 22e des Lagerbocks 22 verläuft. In diesem Ausführungsbeispiel ist ein Führungselement 25 an der Stirnseite 22g des Lagerbocks 22, die zum Koppelrad 20a weist, angebracht. Das Führungselement 25 dient zur Führung der Kette, d.h. des Synchronmittels 20g, an Einlaufkanten der Seitenausnehmungen 22e des Lagerbocks 22, um ein Verhaken des Synchronmittels 20g zu verhindern und eine Führung des Synchronmittels 20g zu verbessern.

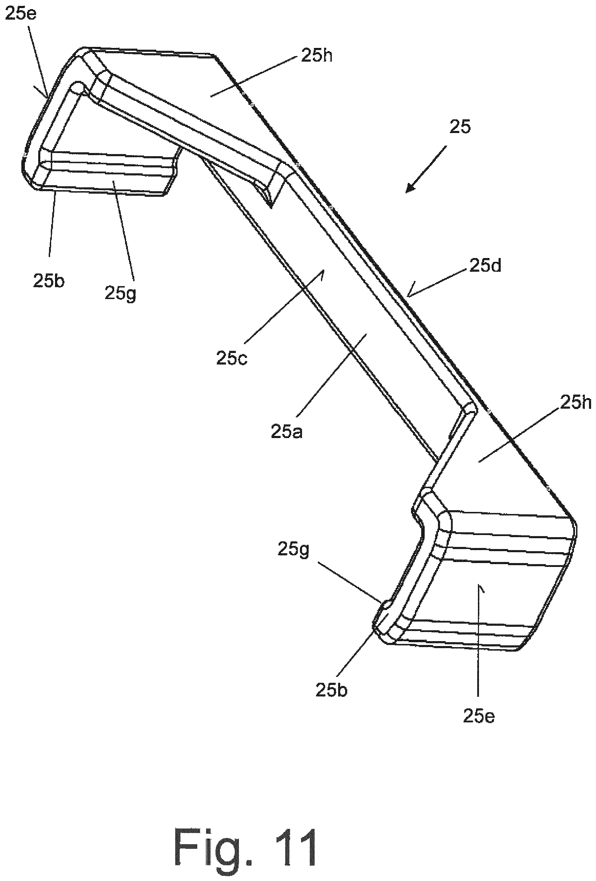

Das Führungselement 25 weist einen langgestreckten Körper 25a auf, an dessen Enden jeweils ein Finger 25b um weniger als ca. 90° zu einer Innenseite 25c des Körpers 25a hin abgewinkelt angeformt ist. Der Körper 25a steht mit seiner Innenseite 25c mit dem Stirnabschnitt 22g des Lagerbocks 22 Kontakt, wobei eine Außenseite 25d des Körpers 25a zum Koppelrad 20a weist. Die Finger 25b sind mit ihren freien Enden leicht zueinander gebogen und weisen jeweils einen Führungsabschnitt 25e an ihren Außenseiten und jeweils einen Befestigungsabschnitt 25f an Druckkanten 25g (Fig. 11) an den Innenseiten ihrer Enden auf. Jeder Führungsabschnitt 25e des Führungselementes 25 verläuft in Längsrichtung des Synchronmittels 20g und ist an seinen Kanten abgerundet. Jeder Befestigungsabschnitt 25f steht unter Vorspannung aufgrund der Form des Führungselementes 25 und gleichfalls in Kontakt mit einer Innenfläche der Seitenausnehmung 22e des Lagerbocks 20. Dies gilt auch für die andere Seite mit der Spindeleinheit 5' und dem dazugehörigen Koppelrad 20'a, was leicht vorstellbar ist. Mit anderen Worten, die Synchroneinrichtung 20 weist zwei Führungselemente 25 auf. Außerdem ist das Führungselement 25 in der in Fig. 11 gezeigten Ausführung mit jeweils einem dreieckförmigen Versteifungsabschnitt 25h versehen, welcher den Körper 25a mit jeweils einem Finger 25b verbindet. Der Werkstoff des Führungselementes 25 kann z.B. ein Kunststoff, ein metallischer Werkstoff oder eine Kombination aus beiden sein.
Schließlich ist in Fig. 12 eine Variante der Synchroneinrichtung 20 nach Fig. 8 und 9 in einer schematischen Perspektivansichten mit der Traverse 8 gezeigt.

In dieser Variante weisen die Lagerböcke 22, 22' auf einer Längsseite jeweils die Seitenausnehmung 22e, 22'e auf, die hier auf der rechten Seite der Fig. 12 durch eine Wand 22i, 22'i in Verlängerung des zugehörigen Seitenabschnitts 22f, 22'f zur Traversenoberseite 8c hin verschlossen sind. Auf der anderen Längsseite sind die Seitenausnehmungen 22e, 22'e nur mit einem geringen Maß in den jeweiligen Lagerbock 22, 22' eingeformt, wobei ihre Kanten zu den Stirnseiten 22g, 22'g hin Führungsrundungen 22j, 22'j zur Führung des Synchronmittels 20g aufweisen. Dabei wird in diesen in Fig. 12 auf der linken Seite liegenden Seitenausnehmungen 22e, 22'e das Synchronmittel 20g an der Innenwand einer jeden Seitenausnehmung 22e, 22'e geführt, in dem das Synchronmittel 20g die Innenwand zum größten Teil kontaktiert. Dadurch erfolgt eine Vorspannung des Synchronmittels 20g.

Außerdem sind in Fig. 12 die Verbindungslaschen 20h des Einsatzelementes 20e in dem Koppelrad 20'a dargestellt. In diesem Beispiel sind vier Verbindungslaschen 20h auf dem inneren Umfang des Einsatzelementes 20e angeordnet. In dem anderen Koppelrad 20a der Spindeleinheit 5 ist das Innenprofil 20d hier in Gestalt von axialen Nuten für den Eingriff mit der Nachstelleinrichtung 11a (siehe Fig. 6a) zu erkennen.

Die Synchroneinrichtung 20 ist für pneumatisch zugespannte Scheibenbremsen im Nutzfahrzeugbereich gestaltet, kann jedoch auch bei allen anderen Anwendungen, wo eine Synchronisation für Verschleißausgleich notwendig ist, zum Einsatz kommen. Natürlich ist das auch bei Bremsen mit mehr als zwei Spindeleinheiten 5, 5' möglich.

Die Erfindung wird durch die oben beschriebenen Ausführungsbeispiele nicht eingeschränkt. Sie ist im Rahmen der beigefügten Ansprüche modifizierbar.

Für die Synchroneinrichtung 20 wird weder eine separate Abdichtung noch ein Deckel benötigt. Dadurch können für die Öffnungen für die Nachstelleinrichtung 11a und die Mitnehmereinrichtung 11b im Bremssattel 4 Deckel mit radialen Dichtungen, z.B. O-Ringe, verwendet werden.

Es ist auch denkbar, dass die Synchroneinrichtung 20 mit der Traverse 8 für andere Scheibenbremsen 1 einsetzbar, die hier nicht beschrieben sind. Dazu ist es erforderlich, dass eine solche Baugruppe entsprechende Schnittstellen angepasst an die damit auszurüstende Scheibenbremse aufweist.

Das Synchronmittel 20g kann beispielsweise auch aus einem Wälzgetriebe mit Zahnrädern bestehen. Es sind natürlich auch andere Ausführungen wie auch Kombinationen aus Zugmittelgetriebe und Wälzgetriebe möglich.

### Bezugszeichenliste

- 1: Scheibenbremse
- 2: Bremsscheibe
- 2a: Bremsscheibenachse
- 3: Bremsbelag
- 3a: Bremsbelagträger
- 4: Bremssattel
- 5, 5': Spindeleinheit
- 5a: Nachstellerachse
- 5'a: Mitnehmerachse
- 6, 6': Gewindestempel
- 6a, 6'a; 6b, 6'b: Wellenende
- 6c, 6'c: Axialnut
- 6d, 6'd: Gewinde
- 6e, 6'e: Druckstück
- 7: Aufsatz
- 7a: Aufsatzabschnitt
- 7b: Betätigungsende
- 7c: Sensor
- 7d: Einbaugehäuse
- 8: Traverse
- 8a, 8'a, 8b, 8'b: Aufnahme
- 8c: Traversenoberseite
- 9: Bremsdrehhebel
- 9a: Hebelkörper
- 9b: Betätiger
- 9c: Betätigungskontur
- 9d, 9'd: Lagerabschnitt
- 9e: Schwenkachse
- 10: Antrieb
- 11: Verschleißnachstellvorrichtung
- 11a: Nachstelleinrichtung
- 11b: Mitnehmereinrichtung
- 12: Lagerscheibe
- 12a: Deckel
- 13: Tragkörper
- 13a: Lagerabschnitt
- 13b: Schulter
- 13c: Aufnahmeabschnitt
- 13d: Auflageabschnitt
- 14: Kopplungselement
- 15: Kugelrampenkupplung
- 15a: Antriebselement
- 15b: Konturabschnitt
- 15c: Rampenkugel
- 15d: Stützkugel
- 15e: Stützscheibe
- 15f: Rampenring
- 15g: Stützhülse
- 16: Freilauf
- 16a: Freilaufkugel
- 16b: Abtriebsring
- 16c: Überlastkupplung
- 17: Druckelement
- 17a: Kopplungsabschnitt
- 17b: Druckkugel
- 17c: Druckscheibe
- 18: Abtriebselement
- 18a: Abtriebskopplungsabschnitt
- 18b: Schulterabschnitt
- 18c: Abtriebsabschnitt
- 18d: Übertragungselement
- 19: Kraftspeicherelement
- 20: Synchroneinrichtung
- 20a, 20'a: Koppelrad
- 20b, 20'b: Synchronabschnitt
- 20c: Eingriffsabschnitt
- 20d: Innenprofil
- 20e: Einsatzelement
- 20f: Verzahnung
- 20g: Synchronmittel
- 20h: Verbindungslasche
- 21, 21', 21'a: Sicherungselement
- 22, 22': Lagerbock
- 22a, 22'a: Zentrieransatz
- 22b, 22'b: Schwenklager
- 22c, 22'c: Lagerfläche
- 22d, 22'd: Auflagefläche
- 22e, 22'e: Seitenausnehmung
- 22f, 22'f: Seitenabschnitt
- 22g, 22'g: Stirnabschnitt
- 22h, 22'h: Ausnehmung
- 22i, 22'i: Wand
- 22j, 22'j: Führungsrundung
- 23: Rückstellfeder
- 24: Axialfeder
- 25: Führungselement
- 25a: Körper
- 25b: Finger
- 25c: Innenseite
- 25d: Außenseite
- 25e: Führungsabschnitt
- 25f: Befestigungsabschnitt
- 25g: Druckkante
- 25h: Versteifungsabschnitt

## Patentansprüche

1. Scheibenbremse (1), vorzugsweise druckluftbetätigt, insbesondere für ein Kraftfahrzeug, mit einer Zuspannvorrichtung, vorzugsweise mit einem Bremsdrehhebel (9), mindestens zwei Spindeleinheiten (5, 5') mit jeweils einem Gewindestempel (6, 6'), wobei die Gewindestempel (6, 6') in einer Traverse (8) eingeschraubt sind, wobei die Traverse (8) mit der Zuspannvorrichtung, vorzugsweise mit dem Bremsdrehhebel (9), zusammenwirkt, einer Nachstelleinrichtung (11a) zum Ausgleich von Belag- und Scheibenverschleiß und einer Synchroneinrichtung (20) zur Übertragung der Drehbewegungen der Nachstelleinrichtung (11a) auf die Gewindestempel (6, 6') und/oder zur Synchronisation der Drehbewegungen der Gewindestempel (6, 6') und mit einem reaktionsseitigen Bremsbelag (3) und mit einem zuspannseitigen Bremsbelag (3), wobei die Synchroneinrichtung (20) zwischen dem Bremsdrehhebel (9) und der Traverse (8) an der Traverse (8) angeordnet ist, **dadurch gekennzeichnet dass** der reaktionsseitige Bremsbelag (3) größer ausgebildet ist als der zuspannseitige Bremsbelag (3).

2. Scheibenbremse (1) nach Anspruch 1, **dadurch gekennzeichnet, dass** beiderseits einer Bremsscheibe (2) der zuspannseitige und der reaktionsseitige Bremsbelag (3) mit jeweils einem Bremsbelagträger (3a) angeordnet sind, wobei der zuspannseitige Bremsbelagträger (3a) mit den Spindeleinheiten (5, 5') über Druckstücke (6e, 6'e) die an Enden der Gewindestempeln (6, 6') angeordnet sind, in Verbindung steht.

3. Scheibenbremse (1) nach Anspruch 1 oder 2, **dadurch gekennzeichnet, dass** der andere, reaktionsseitige Bremsbelagträger (3a) auf der anderen Seite der Bremsscheibe im Bremssattel (4) festgelegt ist.

4. Scheibenbremse (1) nach einem der vorstehenden Ansprüche, **dadurch gekennzeichnet, dass** die Synchroneinrichtung (20) Koppelräder (20a, 20'a), von denen jeweils eins mit dem jeweiligen Gewindestempel (6, 6') einer der mindestens zwei Spindeleinheiten (5, 5') drehfest gekoppelt ist, und ein Synchronmittel (20g) umfasst, wobei jedes Koppelrad (20a, 20'a) einen Synchronabschnitt (20b, 20'b) zur Zusammenwirkung mit dem Synchronmittel (20g) aufweist.

5. Scheibenbremse (1) nach einem der vorstehenden Ansprüche, **dadurch gekennzeichnet, dass** das Synchronmittel (20g) a) ein Zugmittel ist oder dass b) das Synchronmittel (20g) eine Kette ist, und dass die Synchronabschnitte (20b, 20'b) der Koppelräder (20a, 20'a) Kettenradverzahnungen sind.

6. Scheibenbremse (1) einem der vorstehenden Ansprüche, **dadurch gekennzeichnet, dass** das Synchronmittel (20g) an einer Traversenoberseite (8c) der Traverse (8) angeordnet ist.

7. Scheibenbremse (1) nach einem der vorstehenden Ansprüche, **dadurch gekennzeichnet, dass** die Koppelräder (20a, 20'a) der Synchroneinrichtung (20) an der Traverse (8) ortsfest und drehbar angeordnet sind.

8. Scheibenbremse (1) nach Anspruch 7, **dadurch gekennzeichnet, dass** die Koppelräder (20a, 20'a) der Synchroneinrichtung (20) an der Traverse (8) ortsfest und drehbar in Aufnahmen (8a, 8'a) angeordnet und mittels federnder Elemente, vorzugsweise Axialfedern (24) axial vorgespannt sind.

9. Scheibenbremse (1) nach einem der vorstehenden Ansprüche, **dadurch gekennzeichnet, dass** mindestens eins der Koppelräder (20a, 20'a) ein Einsatzelement (20e) aufweist, welches mit dem zugehörigen Koppelrad (20a, 20'a) über eine Verzahnung (20f) verbindbar ist.

10. Scheibenbremse (1) nach einem der vorstehenden Ansprüche, **dadurch gekennzeichnet, dass** das Koppelrad (20a) einen Eingriffsabschnitt (20c) aufweist, der zur drehfesten Zusammenwirkung mit einem Gewindestempel (6, 6') einer Spindeleinheit (5, 5') vorgesehen ist.

11. Scheibenbremse (1) nach einem der vorstehenden Ansprüche, **dadurch gekennzeichnet, dass** auf der Traverse (8) mindestens einer, zwei oder mehr Lagerböcke (22, 22') ausgebildet ist/sind und dass mindestens einer der Lagerböcke (22, 22') mindestens eine Seitenausnehmung (22e, 22'e) zur Führung oder zur Aufnahme des Synchronmittels (20g) aufweist.

12. Scheibenbremse (1) nach Anspruch 11, **dadurch gekennzeichnet, dass** die mindestens eine Seitenausnehmung (22e, 22'e) des mindestens einen der Lagerböcke (22, 22') eine Führungsrundung (22h) zur Führung des Synchronmittels (20g) aufweist.

13. Scheibenbremse (1) nach Anspruch 11 oder 12, **dadurch gekennzeichnet, dass** der mindestens eine der Lagerböcke (22, 22') mit einem separaten Führungselement (25) zur Führung des Synchronmittels (20g) ausgerüstet ist.

14. Scheibenbremse (1) nach Anspruch 11 bis 13, **dadurch gekennzeichnet, dass** der mindestens eine der Lagerböcke (22, 22') oder ein an dem mindestens einen der Lagerböcke (22, 22') anbringbares Bauteil zur Führung und zur Spannung des Synchronmittels (20g) vorgesehen ist.

15. Scheibenbremse (1) nach einem der Ansprüche 11 bis 14, **dadurch gekennzeichnet, dass** der mindestens eine der Lagerböcke (22, 22') separat zur Traverse (8) ausgebildet ist und/oder dass der mindestens eine der Lagerböcke (22, 22') an seiner zum Bremsdrehhebel (9) weisenden Seite eine Lagerfläche (22c, 22'c) mit vorzugsweise halbkreisförmigem Querschnitt aufweist, in welche ein Schwenklager (22b, 22'b), insbesondere ausgebildet als ein Wälzlager oder ein Gleitlager, für den Bremsdrehhebel (9) eingreift und/oder dass die Traverse (8) mit den Gewindestempeln (6, 6') und der Synchroneinrichtung (20) als vormontierte Funktionsbaugruppe ausgeführt ist.

16. Scheibenbremse (1) nach einem der vorhergehenden Ansprüche, **dadurch gekennzeichnet, dass** die Nachstelleinrichtung (11a) antriebsseitig mit der Zuspannvorrichtung, vorzugsweise mit dem Bremsdrehhebel (9), und abtriebsseitig mit einer Spindeleinheit (5, 5') der Scheibenbremse (1) koppelbar ist, und folgendes umfasst:
a) ein Antriebselement (15a), an dem axial beiderseits jeweils eine Wälzkörperanordnung angeordnet ist, von denen eine als Wälzlager und eine als Kugelrampenkupplung (15) mit einem Freilauf (16) ausgebildet ist;
b) ein mit der Kugelrampenkupplung (16) gekoppeltes Druckelement (17), welches mit einem Abschnitt der Kugelrampenkupplung (16) eine Überlastkupplung (16c) bildet;
c) ein mit dem Druckelement (17) gekoppeltes Abtriebselement (18) zur Kopplung mit einem Koppelrad (20a), welches für eine Kopplung mit der Spindeleinheit (5, 5') ausgebildet ist;
d) ein Kraftspeicherelement (19) zur Erzeugung einer Vorspannkraft der Kugelrampenkupplung (16) und der Überlastkupplung (16c); und
e) einen Tragkörper (13), welcher an einem Ende mit einer Lagerscheibe (12) verbunden ist und um welchen herum axial in Reihe mit der Lagerscheibe (12) das Antriebselement (15a), die Wälzkörperanordnungen (15d, 15, 16), die Überlastkupplung (16c), das Abtriebselement (18) und das Kraftspeicherelement (19) angeordnet sind, wobei das Kraftspeicherelement (19) zwischen einem Auflageabschnitt (13d) des Tragkörpers (13) und dem Druckelement (17) angeordnet ist.

17. Scheibenbremse (1) nach Anspruch 16, **dadurch gekennzeichnet, dass** der Tragkörper (13) der Nachstelleinrichtung (11a) in Hülsengestalt ausgebildet ist, wobei das Innere des Tragkörpers (13) für eine Aufnahme eines Gewindestempels (6, 6') einer Spindeleinheit (5, 5') der zuzuordnenden Scheibenbremse (1) ausgestaltet ist.

18. Scheibenbremse (1) nach Anspruch 17, **dadurch gekennzeichnet, dass** ein zylindrischer Abschnitt des Abtriebselementes (18) als Abtriebsabschnitt (18c) zur Kopplung mit dem Koppelrad (20a) ausgebildet ist.

19. Scheibenbremse (1) nach Anspruch 18, **dadurch gekennzeichnet, dass** sich der Abtriebsabschnitt (18c) des Abtriebselementes (18) in einen Innenraum des Koppelrads (20a) erstreckt und mit einem Innenprofil (20d) des Koppelrads (20a) über Übertragungselemente (18d), vorzugsweise Kugeln, in Zusammenwirkung steht und/oder dass der Abtriebsabschnitt (18c) des Abtriebselementes (18), das Innenprofil (20d) des Koppelrads (20a) und die Übertragungselemente (18d) ein kardanisches Gelenk bilden.

## Claims

1. Disc brake (1), preferably actuated by pressure, in particular for a motor vehicle, having an application device, preferably with a pivoting brake lever (9), at least two spindle units (5, 5') each with a threaded plunger (6, 6'), wherein the threaded plungers (6, 6') are screwed into a cross-member (8), wherein the cross-member (8) co-operates with the application device, preferably with the pivoting brake level (9), an adjustment device (11a) for compensating brake-pad and disc wear and a synchronizing device (20) for transmitting the rotation movements of the adjustment device (11a) to the threaded plungers (6, 6') and/or for synchronizing the rotation movements of the threaded plungers (6, 6'), and with a reaction-side brake-pad (3) and an application-side brake-pad (3), wherein the said synchronizing device (20) is arranged on the cross-member (8) between the pivoting brake lever (9) and the cross-member (8),
**characterised in that** the brake-pad (3) on the reaction side is made larger than the brake-pad (2) on the application side.

2. Disc brake (1) according to Claim 1, **characterised in that** on the two sides of a brake disc (2), the application-side and the reaction-side, brake-pads (3) are each arranged with a brake-pad carrier (3a), and the brake-pad carrier (3a) on the application side is connected to the spindle units (5, 5') by way of pressure elements (6e, 6'e) arranged on ends of the threaded plungers (6, 6').

3. Disc brake (1) according to Claims 1 or 2, **characterised in that** the other, reaction-side brake-pad carrier (3a) is fixed onto the other side of the brake disc in the brake caliper (4).

4. Disc brake (1) according to any of the preceding claims, **characterised in that** the synchronizing device (20) comprises coupling wheels (20a, 20'a) of which in each case one is coupled rotationally fixed to the respective threaded plunger (6, 6') of one of the at least two spindle units (5, 5'), and has synchronizing means (20g), and each coupling wheel (20a, 20'a) has a synchronizing section (20b, 20'b) for co-operating with the synchronizing means (20g).

5. Disc brake (1) according to any of the preceding claims, **characterised in that** the synchronizing means (20g) a) is a tensioning means or b) the synchronizing means (20g) is a chain, and the synchronizing sections (20b, 20'b) of the coupling wheels (20a, 20'a) consist of chain sprockets.

6. Disc brake (1) according to any of the preceding claims, **characterised in that** the synchronizing means (20g) are arranged on an upper side (8c) of the cross-member (8).

7. Disc brake (1) according to any of the preceding claims, **characterised in that** the coupling wheels (20a, 20'a) of the synchronizing device (20) are arranged in a fixed position and are able to rotate on the cross-member (8).

8. Disc brake (1) according to any of the preceding claims, **characterised in that** the coupling wheels (20a, 20'a) of the synchronizing device (20) are arranged positionally fixed and able to rotate in recesses (8a, 8'a) and are axially prestressed by means of spring elements, preferably axial springs (24).

9. Disc brake (1) according to any of the preceding claims, **characterised in that** at least one of the coupling wheels (20a, 20'a) has an insert element (20e), which can be engaged with the associated coupling wheel (20a, 20'a) by means of teeth (20f).

10. Disc brake (1) according to any of the preceding claims, **characterised in that** the coupling wheel (20a) has an engagement section (20c), which is provided for rotationally fixed co-operation with a threaded plunger (6, 6') of a spindle unit (5, 5').

11. Disc brake (1) according to any of the preceding claims, **characterised in that** on the cross-member (8) there are formed at least one, two or more bearing blocks (22, 22'), and at least one of the bearing blocks (22, 22') has at least one lateral recess (22e, 22'e) for guiding or receiving the synchronizing means (20g).

12. Disc brake (1) according to Claim 11, **characterised in that** the at least one lateral recess (22e, 22'e) of the at least one of the bearing blocks (22, 22') has a guiding bevel (22h) for guiding the synchronizing means (20g).

13. Disc brake (1) according to Claims 11 or 12, **characterised in that** the at least one of the bearing blocks (22, 22') is fitted with a separate guiding element (25) for guiding the synchronizing means (20g).

14. Disc brake (1) according to any of Claims 11 to 13, **characterised in that** the at least one of the bearing blocks (22, 22') or a component that can be attached to the at least one of the bearing blocks (22, 22') is provided for guiding and for clamping the synchronizing means (20g).

15. Disc brake (1) according to any of Claims 11 to 14, **characterised in that** the at least one of the bearing blocks (22, 22') is formed separately on the cross-member (8) and/or the at least one of the bearing blocks (22, 22') has on its side facing the pivoting brake lever (9) a bearing surface (22c, 22'c) preferably with a semicircular cross-section, in which a swivel bearing (22b, 22'), in particular in the form of a roller bearing or a slide bearing for the pivoting brake lever (9) engages, and/or the cross-member (8) is formed as a functional assembly together with the threaded plungers (6, 6') and the synchronizing device (20).

16. Disc brake (1) according to any of the preceding claims, **characterised in that** the adjustment device (11a) can be coupled on the drive input side to the application device, preferably to the pivoting brake lever (9), and on the drive output side to a spindle unit (5, 5') of the disc brake (1), and comprises the following:
a) a drive element (15a) on each axial side of which a roller body arrangement is arranged, of which one is in the form of a roller bearing and one is in the form of a ball ramp coupling (15) with a freewheel (16);
b) a pressure element (17) coupled to the ball ramp coupling (16), which with a section of the ball ramp coupling (16) forms an overload coupling (16c);
c) a drive output element (18) coupled to the pressure element (17) for coupling to a coupling wheel (20a) which is designed for coupling with the spindle unit (5, 5');
d) a force-storage element (19) for producing a prestressing force of the ball ramp coupling (16) and the overload coupling (16c); and
e) a support body (13), which is connected at one end to a bearing plate (12) and around which, axially in series with the bearing plate (12), are arranged the drive input element (15a), the roller body arrangements (15d, 15, 16), the overload coupling (16c), the drive output element (18) and the force-storage element (19), with the force-storage element (19) arranged between a contact section (13d) of the support body (13) and the pressure element (17).

17. Disc brake (1) according to Claim 16, **characterised in that** the support body (13) of the adjustment device (11a) is designed as a sleeve, and the inside of the support body (13) is designed to receive a threaded plunger (6, 6') of a spindle unit (5, 5') of the disc brake (1) to be associated therewith.

18. Disc brake (1) according to Claim 17, **characterised in that** a cylindrical section of the drive output element (18) is designed as a drive output section (18c) for coupling with the coupling wheel (20a).

19. Disc brake (1) according to Claim 18, **characterised in that** the drive output section (18c) of the drive output element (18) extends into an inside space of the coupling wheel (20a) and co-operates with an inner profile (20d) of the coupling wheel (20a) by means of transfer elements (18d), preferably balls, and/or the drive output section (18c) of the drive output element (18), the inner profile (20d) of the coupling wheel (20a) and the transfer element (18d) form a cardanic joint.

## Revendications

1. Frein (1) à disque, de préférence à actionnement par l'air comprimé, notamment pour un véhicule automobile, comprenant un dispositif de serrage, ayant de préférence un levier (9) tournant de frein, au moins deux unités (5, 5') de broche, ayant chacune un poinçon (6, 6') fileté, les poinçons (6, 6') filetés étant vissés dans une traverse (8), la traverse (8) coopérant avec le dispositif de serrage, de préférence avec le levier (9) tournant de frein, un dispositif (11a) de rattrapage pour compenser l'usure de garniture et de disque et un dispositif (20) de synchronisation pour transmettre des mouvements de rotation du dispositif (11a) de rattrapage aux poinçons (6, 6') filetés et/ou pour synchroniser les mouvements de rotation des poinçons (6, 6') filetés et comprenant une garniture (3) de frein du côté de la réaction et une garniture (3) de frein du côté du serrage,
dans lequel le dispositif (20) de synchronisation est monté sur la traverse (8) entre le levier (9) tournant de frein et la traverse (8),
**caractérisé**
**en ce que** la garniture de frein (3) du côté du de la réaction est plus grande que la garniture (3) de frein du côté du serrage.

2. Frein (1) à disque suivant la revendication 1, **caractérisé en ce que**, de part et d'autre d'un disque (2) de frein, la garniture (3) de frein du côté du serrage et la garniture (3) de frein du côté de la réaction sont montées chacune par un support (3a) de garniture de frein, le support (3a) de garniture de frein du côté du serrage étant en liaison avec les unités (5, 5') de broche par l'intermédiaire de pièces (6e, 6'e) d'application d'une pression, qui sont disposées aux extrémités des poinçons (6, 6') filetés.

3. Frein (1) à disque suivant la revendication 1 ou 2, **caractérisé en ce que** le support (3a) de garniture de frein du côté de la réaction est fixé dans l'étrier (4) de frein de l'autre côté du disque de frein.

4. Frein (1) à disque suivant l'une des revendications précédentes, **caractérisé en ce que** le dispositif (20) de synchronisation a des roues (20a, 20'a) de couplage, dont l'une est solidaire en rotation du poinçon (6, 6') fileté respectif de l'une des au moins deux unités (5, 5') de broche et un moyen (20g) de synchronisation, chaque roue (20a, 20'a) de couplage ayant une partie (20b, 20'b) de synchronisation avec le moyen (20g) de synchronisation.

5. Frein (1) à disque suivant l'une des revendications précédentes, **caractérisé en ce que** le moyen (20g) de synchronisation a) est un moyen de traction ou **en ce que** le moyen (20g) de synchronisation b) est une chaîne et **en ce que** les parties (20b, 20'b) de synchronisation des roues (20a, 20'a) de couplage sont des dentures de roue à chaîne.

6. Frein (1) à disque suivant l'une des revendications précédentes, **caractérisé en ce que** le moyen (20g) de synchronisation est monté sur un côté (8c) supérieur de la traverse (8).

7. Frein (1) à disque suivant l'une des revendications précédentes, **caractérisé en ce que** les roues (20a, 20'a) de couplage du dispositif (20) de synchronisation sont montées à poste fixe sur la traverse (8) et tournantes.

8. Frein (1) à disque suivant la revendication 7, **caractérisé en ce que** les roues (20a, 20'a) de couplage du dispositif (20) de synchronisation sont montées sur la traverse à poste fixe et tournantes dans des logements (8a, 8'a) et sans précontrainte axialement au moyen d'éléments élastiques, de préférence de ressorts (24) axiaux.

9. Frein (1) à disque suivant l'une des revendications précédentes, **caractérisé en ce qu'**au moins l'une des roues (20a, 20'a) de couplage a un élément (20e) d'insertion, qui peut être relié à la roue (20a, 20'a) de couplage associée par l'intermédiaire d'une denture (20f).

10. Frein (1) à disque suivant l'une des revendications précédentes, **caractérisé en ce que** la roue (20a) de couplage a une partie (20c) d'engrenage, prévue pour la coopération, fixe en rotation, avec un poinçon (6, 6') fileté d'une unité (5, 5') de broche.

11. Frein (1) à disque suivant l'une des revendications précédentes, **caractérisé en ce qu'**au moins un, deux ou plusieurs paliers support (22, 22') est/sont constitués sur la traverse (8) et **en ce qu'**au moins l'un des paliers support (22, 22') a au moins un creux (22e, 22'e) latéral de guidage et/ou de réception du moyen (20g) de synchronisation.

12. Frein (1) à disque suivant la revendication 11, **caractérisé en ce que** le au moins un creux (22e, 22'e) latéral du au moins un des paliers support (22, 22') a un arrondi (22h) de guidage pour guider le moyen (20g) de synchronisation.

13. Frein (1) à disque suivant la revendication 11 ou 12, **caractérisé en ce que** le au moins un des paliers supports (22, 22') est équipé d'un élément (25) de guidage distinct pour guider le moyen (20g) de synchronisation.

14. Frein (1) à disque suivant l'une des revendications 11 à 13, **caractérisé en ce que** au moins un des paliers supports (22, 22'), ou une pièce pouvant être mise sur le au moins un des paliers supports (22, 22'), est prévu pour guider et pour bloquer le moyen (20g) de synchronisation.

15. Frein (1) à disque suivant l'une des revendications 11 à 14, **caractérisé en ce que** au moins un des paliers supports (22, 22') est constitué d'une manière distincte de la traverse (8) et/ou **en ce que** le au moins un des paliers supports (22, 22') a, du côté tourné vers le levier (9) tournant de frein, une surface (22c, 22'c) de palier ayant une section transversale, de préférence hémicirculaire, dans laquelle pénètre un palier (22b, 22'b) pivotant, constitué notamment sous la forme d'un palier à roulement ou d'un palier lisse, pour le levier (9) tournant de frein et/ou **en ce que** la traverse (8), avec les poinçons (6, 6') filetés et le dispositif (20) de synchronisation, est réalisée sous la forme d'un module fonctionnel prémonté.

16. Frein (1) à disque suivant l'une des revendications précédentes, **caractérisé en ce que** le dispositif (11a) de rattrapage peut être couplé, du côté menant, au dispositif de serrage, de préférence au levier (9) tournant de frein, et, du côté mené, à une unité (5, 5') de broche du frein (1) à disque, et comprend ce qui suit :
a) un élément (15a) d'entraînement, sur lequel est monté axialement, des deux côtés respectivement, un agencement à corps de roulement, dont l'un est constitué sous la forme d'un palier (15d) de roulement et un autre sous la forme d'un couplage (15) à rampe à bille ayant une roue libre (16) ;
b) un élément (17) d'application d'une pression, qui est couplé au couplage (16) à rampe à bille et qui forme un couplage (16c) de surcharge avec une partie de l'accouplement (16) à rampe à bille ;
c) un élément (18) mené, couplé à l'élément (17) d'application d'une pression, pour se coupler à une roue (20a) de couplage, qui est constituée pour un couplage avec l'unité (5, 5') de broche ;
d) un élément (19) d'accumulation de force, pour produire une force de précontrainte de l'accouplement (16) à rampe à bille et de l'accouplement (16c) de surcharge et
e) un corps (13) support, qui a une extrémité reliée à un disque (12) formant palier, et tout autour duquel sont montés axialement, à la file avec le disque (12) formant support, l'élément (15a) d'entraînement, les agencements (15d, 15, 16) de corps de roulement, l'accouplement (16c) de surcharge, l'élément (18) mené et l'élément (19) d'accumulation de force, l'élément (19) d'accumulation de force étant disposé entre une partie (13d) d'application du corps (13) support et l'élément (17) d'application d'une pression.

17. Frein (1) à disque suivant la revendication 16, **caractérisé en ce que** le corps (13) support du dispositif (11a) de rattrapage est constitué sous la forme d'une douille, l'intérieur du corps (13) support étant constitué pour la réception d'un poinçon (6, 6') fileté d'une unité (5, 5') de broche du frein (1) à disque à associer.

18. Frein (1) à disque suivant la revendication 17, **caractérisé en ce qu'**une partie cylindrique de l'élément (18) mené est constituée sous la forme d'une partie (18c) menée pour le couplage avec la roue (20a) de couplage.

19. Frein (1) à disque suivant la revendication 18, **caractérisé en ce que** la partie (18c) menée de l'élément (18) mené s'étend dans un espace intérieur de la roue (20a) de couplage et est en coopération avec un profil (20d) intérieur de la roue (20a) de couplage par l'intermédiaire d'éléments (18d) de transmission, de préférence des billes.
